# EUROPEAN PATENT APPLICATION

(11) **EP 3 393 169 A1**
(43) Date of publication of application: **24.10.2018**
(21) Application number: 16874572.7
(22) Date of filing: 30.08.2016
(51) Int. Cl.: H04W 36/00, H04L 29/06

(54) **METHOD AND DEVICE FOR BEFORE-RINGING RADIO VOICE CALL CONTINUITY**

(30) Priority: 16.12.2015 CN 201510953621
(71) Applicant: ZTE Corporation, Shenzhen, Guangdong 518057 (CN)
(72) Inventor: GAO, Yang, Shenzhen Guangdong 518057 (CN); MU, Lingjiang, Shenzhen Guangdong 518057 (CN); NI, Ming, Shenzhen Guangdong 518057 (CN)
(74) Representative: Lavoix
(86) International application number: PCT/CN2016/097362
(87) International publication number: WO 2017/101512

(57) **Abstract**

Provided are a method and device for before-ringing radio voice call continuity (bSRVCC). The method comprises: a service continuity application server (SCC AS) receiving a bSRVCC switching request of a calling terminal (S410); the SCC AS adjudging whether a first message is received before receiving the bSRVCC switching request, wherein the first message comprises a message sent by a called terminal and carrying an answer session description protocol (Answer SDP) (S412); and in the case where the SCC AS has determined that the first message is not received before receiving the bSRVCC switching request, the SCC AS caching the bSRVCC switching request, and ending a pre-determined message at the SCC AS before receiving the first message, wherein the pre-determined message comprises a message sent by the called terminal and not carrying the Answer SDP (S414). By means of the present invention, the problem that the bSRVCC procedure in a related specification of the 3^{rd}-Generation Partnership Project (3GPP) is non-enforceable is solved, thereby providing an enforceable bSRVCC procedure.

## Description

### TECHNICAL FIELD

The invention relates to the field of communications, and in particular to a method and apparatus for before-ringing Single Radio Voice Call Continuity (bSRVCC), and a Service Continuity Application Server (SCC AS).

### BACKGROUND

SRVCC is a voice service (i.e., VoLTE) continuity solution based on an IP Multimedia Subsystem (IMS) and proposed by a 3rd Generation Partnership Project (3GPP), which is a system solution proposed for mainly solving the problem about how to ensure voice call continuity when a single-radio User Equipment (UE) moves between a Long Time Evolution (LTE) network and a 2G/3G mobile communication Circuit Switch (CS) domain network, and is a core key technology among VoLTE technologies.

The bSRVCC is an enhanced technical solution proposed by the 3GPP for a situation where a calling terminal has initiated a call, but a called terminal does not have a pre-alerting phase and the calling terminal makes an SRVCC handover. From the perspective of radio resource reservation, because consumed time is in a magnitude of seconds (normally 3-5 seconds, if a network state is not good, the consumed time is longer), and the probability that the calling terminal makes an SRVCC handover is very high at this phase, bSRVCC is critical to the user experience.

During a research process, it was found that a bSRVCC procedure defined by the 3GPP currently has major problems. The analysis is as follows.

For the functions of bSRVCC in a 3GPP related specification, the processing procedure details of an SCC AS are defined.

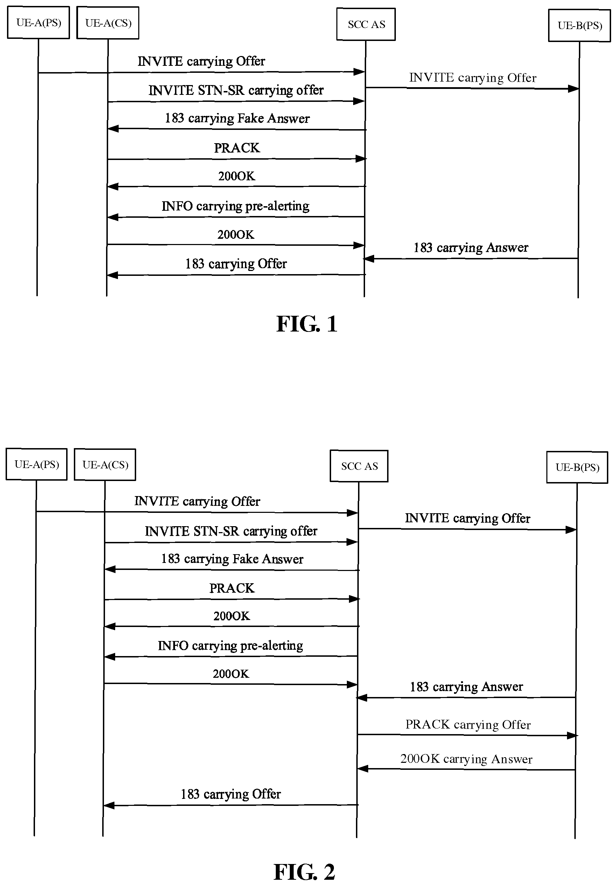

FIG. 1 shows the case where two INVITE messages carry the same Session Description Protocol (SDP). According to the definition of the related specification, a 183 message of a backward terminal (called terminal side) is directly transferred to a forward terminal (calling terminal side). However, at this time, the forward terminal has used a Fake SDP to return to the 183 message according to the previous definition of the related specification. Thus, there is a case where a second 183 message carries an Offer SDP. However, according to a Request For Comments (RFC) standard, the previous Offer/Answer is completed, and a subsequent 183 message should not carry the Offer SDP.

FIG. 2 shows the case where two INVITE messages carry different SDPs. According to the definition of the related specification, after a backward 183 message arrives, an SCC AS carries an Offer in the forward INVITE in a Provisional Response ACKnowledgement (PRACK), and after a backward Answer is subsequently received, a 183 message carrying an SDP is constructed and sent to a forward terminal. In this case, a manner of using a PRACK to carry an Offer is not recommended, except that it contradicts an RFC standard.

In addition, even if the forward 183 message is changed to an UPDATE message to circumvent the problem of conflicting with the RFC standard, since the SCC AS still has an Answer-to-Offer process, this process may also cause the problem of media negotiation oscillation.

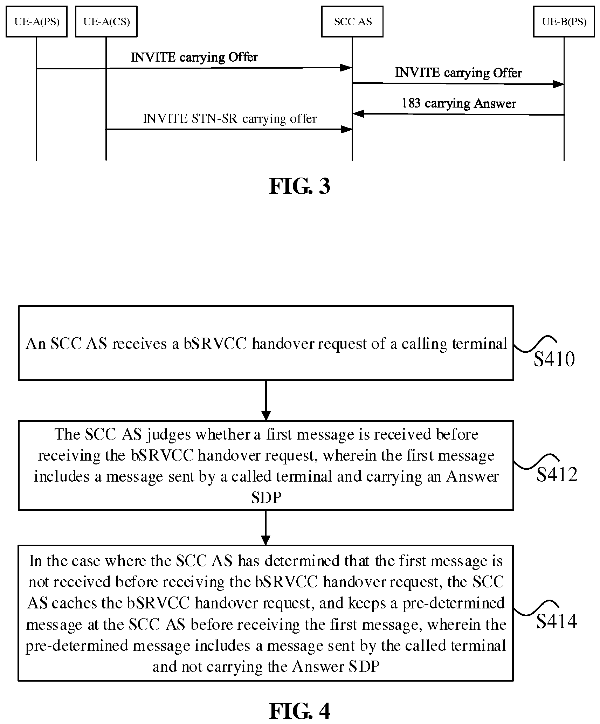

Further, the scenario for sending an INFO (carrying pre-alerting) message in a 3GPP related specification is limited to the scenario where the SCC AS receives a handover INVITE and there is no early dialog (i.e., before-ringing) backward. In principle, before the handover INVITE arrives, the backward terminal may have received the 183 message without receiving a 180 message, as shown in FIG. 3. From the point of view of resource reservation consumption time, this scenario should have a higher probability. For this procedure, INFO (carrying pre-alerting) should also be sent.

In addition, the SCC AS currently supports an SRVCC handover of a non-Precondition compatible procedure, which are not defined in the 3GPP related specification.

In summary, a bSRVCC process in a current 3GPP related specification is non-implementable, and the support for bSRVCC in the industry is also currently systematically absent.

### SUMMARY

The embodiments of the invention provide a method and apparatus for bSRVCC, and an SCC AS, intended to at least solve the problem that a bSRVCC procedure in a 3GPP related specification is non-implementable.

According to an embodiment of the invention, a method for bSRVCC is provided, which includes the steps as follows.

An SCC AS receives a bSRVCC handover request of a calling terminal.

The SCC AS judges whether a first message is received before receiving the bSRVCC handover request, wherein the first message includes a message sent by a called terminal and carrying an Answer SDP.

In the case where the SCC AS has determined that the first message is not received before receiving the bSRVCC handover request, the SCC AS caches the bSRVCC handover request, and keeps a pre-determined message at the SCC AS before receiving the first message, wherein the pre-determined message includes a message sent by the called terminal and not carrying the Answer SDP.

Alternatively, the pre-determined message includes at least one of: a non-180 message sent by the called terminal and not carrying an Answer SDP, or a 200OK message sent by the called terminal and not carrying an Answer SDP.

Alternatively, before the SCC AS receives the bSRVCC handover request of the calling terminal, the method further includes: the SCC AS receives a call request initiated by the calling terminal at a Packet Switch (PS) domain; and the SCC AS sends the call request to the called terminal, wherein the step that the SCC AS receives the bSRVCC handover request of the calling terminal includes: in the case where the calling terminal makes a handover from a PS domain to a CS domain, the SCC AS receives the bSRVCC handover request, wherein the bSRVCC handover request is sent by an enhanced Mobile Switch Center (eMSC) of the calling terminal.

Alternatively, after the SCC AS caches the bSRVCC handover request, the method further includes: the SCC AS receives the first message reliably transmitted; the SCC AS judges whether an SDP carried in the call request is the same as an SDP carried in the bSRVCC handover request; in the case where the SCC AS has determined that the SDP carried in the call request is different from the SDP carried in the bSRVCC handover request, the SCC AS sends a second message to the called terminal, wherein the second message includes an UPDATE message carrying an offer SDP of the bSRVCC handover request; and the SCC AS receives a third message, wherein the third message includes a 200OK message responsive to the second message and carrying an Answer SDP.

Alternatively, in the case where the SCC AS has determined that the SDP carried in the call request is the same as the SDP carried in the bSRVCC handover request, or, after the SCC AS receives the third message, the method further includes: the SCC AS sends a fourth message reliably transmitted to the calling terminal, wherein the fourth message includes a 183 message carrying an Answer SDP and bSRVCC capability information of the called terminal; the SCC AS sends a fifth message to the calling terminal, wherein the fifth message includes an INFO message carrying a current pre-alerting state; the SCC AS receives a sixth message, wherein the sixth message includes a 200OK message responsive to the fifth message; the SCC AS receives a seventh message, and forwards the seventh message to the calling terminal, wherein the seventh message includes a 180 message sent by the called terminal; the SCC AS receives an eighth message, and forwards the eighth message to the calling terminal, wherein the eighth message includes an off-hook 200OK message sent by the called terminal; the SCC AS receives a ninth message, and forwards the ninth message to the called terminal, wherein the ninth message includes an ACK message responsive to the eighth message; the SCC AS sends an eleventh message reliably transmitted to the calling terminal, wherein the eleventh message includes a 183 message carrying an Answer SDP and bSRVCC capability information of the called terminal; the SCC AS sends a twelfth message to the called terminal, wherein the twelfth message includes an INFO message carrying a current pre-alerting state; the SCC AS receives a thirteenth message, wherein the thirteenth message includes a 200OK message responsive to the twelfth message; the SCC AS receives a fourteenth message, and forwards the fourteenth message to the calling terminal, wherein the fourteenth message includes a 180 message sent by the called terminal; the SCC AS receives a fifteenth message, and forwards the fifteenth message to the calling terminal, wherein the fifteenth message includes an off-hook 200OK message sent by the called terminal; and the SCC AS receives a sixteenth message, and forwards the sixteenth message to the called terminal, wherein the sixteenth message includes an ACK message responsive to the fifteenth message.

Alternatively, after the SCC AS caches the bSRVCC handover request, the method further includes: the SCC AS receives a seventeenth message, wherein the seventeenth message includes a 180 message sent by the called terminal; the SCC AS sends an eighteenth message reliably transmitted to the calling terminal, wherein the eighteenth message includes a 183 message carrying a Fake SDP and bSRVCC capability information of the called terminal; the SCC AS sends a nineteenth message to the calling terminal, wherein the nineteenth message includes a 180 message not carrying an SDP; the SCC AS sends a twentieth message to the calling terminal, wherein the twentieth message includes an INFO message carrying a current pre-alerting state; the SCC AS receives a twenty-first message, wherein the twenty-first message includes a 200OK message responsive to the twentieth message; the SCC AS receives a twenty-second message, wherein the twenty-second message includes an off-hook 200OK message sent by the called terminal; the SCC AS sends a twenty-third message to the calling terminal, wherein the twenty-third message includes an off-hook 200OK message not carrying an SDP; and the SCC AS sends a twenty-fourth message to the called terminal, and receives a twenty-fifth message, wherein the twenty-fourth message includes an ACK message responsive to the twenty-second message, and the twenty-fifth message includes an ACK message responsive to the twenty-third message.

Alternatively, after the SCC AS caches the bSRVCC handover request, the method further includes: the SCC AS receives a twenty-sixth message, wherein the twenty-sixth message includes a 200OK message responsive to the call request and carrying an Answer SDP; the SCC AS sends a twenty-seventh message to the calling terminal, wherein the twenty-seventh message includes a 183 message carrying a Fake SDP and bSRVCC capability information of the called terminal; the SCC AS sends a twenty-eighth message to the called terminal, wherein the twenty-eighth message includes an ACK message responsive to the twenty-sixth message; the SCC AS sends a twenty-ninth message to the calling terminal, wherein the twenty-ninth message includes a 180 message not carrying an SDP; the SCC AS sends a thirtieth message to the calling terminal, wherein the thirtieth message includes an INFO message carrying a current pre-alerting state; the SCC AS receives a thirty-first message, wherein the thirty-first message includes a 200OK message responsive to the thirtieth message; the SCC AS receives a thirty-second message, wherein the thirty-second message includes an off-hook 200OK message sent by the called terminal; the SCC AS sends a thirty-third message to the calling terminal, wherein the thirty-third message includes an off-hook 200OK message not carrying an SDP; and the SCC AS receives a thirty-fourth message, wherein the thirty-fourth message includes an ACK message responsive to the thirty-third message.

Alternatively, after the SCC AS sends the call request to the called terminal and before the SCC AS receives the bSRVCC handover request of the calling terminal, the method further includes: the SCC AS receives the first message reliably transmitted, and forwards the first message to the calling terminal; and after the SCC AS receives the bSRVCC handover request of the calling terminal, the method further includes: the SCC AS judges whether a thirty-fifth message is received, wherein the thirty-fifth message includes a PRACK message of the calling terminal responsive to the first message; in the case where the SCC AS has determined that the thirty-fifth message is not received, the SCC AS sends a thirty-sixth message to the called terminal, wherein the thirty-sixth message includes a PRACK message responsive to the first message; and the SCC AS receives a thirty-seventh message, wherein the thirty-seventh message includes a 200OK message responsive to the thirty-sixth message.

Alternatively, after the SCC AS sends the call request to the called terminal and before the SCC AS receives the bSRVCC handover request of the calling terminal, the method further includes: the SCC AS receives the first message reliably transmitted, and forwards the first message to the calling terminal; and after the SCC AS receives the bSRVCC handover request of the calling terminal, the method further includes: the SCC AS judges whether a thirty-eighth message is received and forwarded to the calling terminal before the SCC AS receives the bSRVCC handover request of the calling terminal and whether a thirty-ninth message is received before the SCC AS receives the bSRVCC handover request of the calling terminal, wherein the thirty-eighth message includes an UPDATE message sent by the called terminal, and the thirty-ninth message includes a 200OK message of the calling terminal responsive to the thirty-eighth message; and in the case where the SCC AS has determined that the thirty-eighth message is received and forwarded to the calling terminal before the SCC AS receives the bSRVCC handover request of the calling terminal and that the thirty-ninth message is not received before the SCC AS receives the bSRVCC handover request of the calling terminal, the SCC AS sends a fortieth message to the called terminal, wherein the fortieth message includes a 200OK message responsive to the thirty-eighth message.

Alternatively, in the case where the SCC AS has determined that the thirty-fifth message is already received, or, after the SCC AS receives the thirty-seventh message, or, in the case where the SCC AS has determined that the thirty-eighth message is received and forwarded to the calling terminal before the SCC AS receives the bSRVCC handover request of the calling terminal and that the thirty-ninth message is received before the SCC AS receives the bSRVCC handover request of the calling terminal, or, after the SCC AS sends the fortieth message to the called terminal, the method further includes: the SCC AS judges whether an SDP carried in the call request is the same as an SDP carried in the bSRVCC handover request; in the case where the SCC AS has determined that the SDP carried in the call request is different from the SDP carried in the bSRVCC handover request, the SCC AS sends a forty-first message to the called terminal, wherein the forty-first message includes an UPDATE message carrying an offer SDP of the bSRVCC handover request; and the SCC AS receives a forty-second message, wherein the forty-second message includes a 200OK message responsive to the forty-first message and carrying an Answer SDP.

Alternatively, in the case where the SCC AS has determined that the SDP carried in the call request is the same as the SDP carried in the bSRVCC handover request, or, after the SCC AS receives the forty-second message, the method further includes: the SCC AS sends a forty-third message reliably transmitted to the calling terminal, wherein the forty-third message includes a 183 message carrying an Answer SDP and bSRVCC capability information of the called terminal; the SCC AS sends a forty-fourth message to the calling terminal, wherein the forty-fourth message includes an INFO message carrying a current pre-alerting state; the SCC AS receives a forty-fifth message, wherein the forty-fifth message includes a 200OK message responsive to the forty-fourth message; the SCC AS receives a forty-sixth message, and forwards the forty-sixth message to the calling terminal, wherein the forty-sixth message includes a 180 message sent by the called terminal; the SCC AS receives a forty-seventh message, and forwards the forty-seventh message to the calling terminal, wherein the forty-seventh message includes an off-hook 200OK message sent by the called terminal; and the SCC AS receives a forty-eighth message, and forwards the forty-eighth message to the calling terminal, wherein the forty-eighth message includes an ACK message responsive to the forty-seventh message.

According to an embodiment of the invention, an apparatus for bSRVCC is also provided. The apparatus applied to an SCC AS alternatively includes: a first module, configured to receive a bSRVCC handover request of a calling terminal; a second module, configured to judge whether a first message is received before the bSRVCC handover request is received, wherein the first message includes a message sent by a called terminal and carrying an Answer SDP; and a third module, configured to cache, in the case where the second module has determined that the first message is not received before the bSRVCC handover request is received, the bSRVCC handover request, and keep a pre-determined message at the SCC AS before the first message is received, wherein the pre-determined message includes a message sent by the called terminal and not carrying the Answer SDP.

Alternatively, the pre-determined message includes at least one of: a non-180 message sent by the called terminal and not carrying an Answer SDP, or a 200OK message sent by the called terminal and not carrying an Answer SDP.

Alternatively, the apparatus further includes: a fourth module, configured to receive a call request initiated by the calling terminal at a PS domain; and a fifth module, configured to send the call request to the called terminal, wherein the first module is configured to receive, in the case where the calling terminal makes a handover from a PS domain to a CS domain, the bSRVCC handover request, wherein the bSRVCC handover request is sent by an eMSC of the calling terminal.

Alternatively, the apparatus further includes: a sixth module, configured to receive the first message reliably transmitted; a seventh module, configured to judge whether an SDP carried in the call request is the same as an SDP carried in the bSRVCC handover request; an eighth module, configured to send, in the case where the seventh module has determined that the SDP carried in the call request is different from the SDP carried in the bSRVCC handover request, a second message to the called terminal, wherein the second message includes an UPDATE message carrying an offer SDP of the bSRVCC handover request; and a ninth module, configured to receive a third message, wherein the third message includes a 200OK message responsive to the second message and carrying an Answer SDP.

Alternatively, the apparatus further includes: a tenth module, configured to send, in the case where the seventh module has determined that the SDP carried in the call request is the same as the SDP carried in the bSRVCC handover request, or, after the ninth module receives the third message, a fourth message reliably transmitted to the calling terminal, wherein the fourth message includes a 183 message carrying an Answer SDP and bSRVCC capability information of the called terminal; an eleventh module, configured to send a fifth message to the calling terminal, wherein the fifth message includes an INFO message carrying a current pre-alerting state; a twelfth module, configured to receive a sixth message, wherein the sixth message includes a 200OK message responsive to the fifth message; a thirteenth module, configured to receive a seventh message, and forward the seventh message to the calling terminal, wherein the seventh message includes a 180 message sent by the called terminal; a fourteenth module, configured to receive an eighth message, and forward the eighth message to the calling terminal, wherein the eighth message includes an off-hook 200OK message sent by the called terminal; a fifteenth module, configured to receive a ninth message, and forward the ninth message to the called terminal, wherein the ninth message includes an ACK message responsive to the eighth message; a sixteenth module, configured to send an eleventh message reliably transmitted to the calling terminal, wherein the eleventh message includes a 183 message carrying an Answer SDP and bSRVCC capability information of the called terminal; a seventeenth module, configured to send a twelfth message to the called terminal, wherein the twelfth message includes an INFO message carrying a current pre-alerting state; an eighteenth module, configured to receive a thirteenth message, wherein the thirteenth message includes a 200OK message responsive to the twelfth message; a nineteenth module, configured to receive a fourteenth message, and forward the fourteenth message to the calling terminal, wherein the fourteenth message includes a 180 message sent by the called terminal; a twentieth module, configured to receive a fifteenth message, and forward the fifteenth message to the calling terminal, wherein the fifteenth message includes an off-hook 200OK message sent by the called terminal; and a twenty-first module, configured to receive a sixteenth message, and forward the sixteenth message to the called terminal, wherein the sixteenth message includes an ACK message responsive to the fifteenth message.

Alternatively, the apparatus further includes: a twenty-second module, configured to receive a seventeenth message, wherein the seventeenth message includes a 180 message sent by the called terminal; a twenty-third module, configured to send an eighteenth message reliably transmitted to the calling terminal, wherein the eighteenth message includes a 183 message carrying a Fake SDP and bSRVCC capability information of the called terminal; a twenty-fourth module, configured to send a nineteenth message to the calling terminal, wherein the nineteenth message includes a 180 message not carrying an SDP; a twenty-fifth module, configured to send a twentieth message to the calling terminal, wherein the twentieth message includes an INFO message carrying a current pre-alerting state; a twenty-sixth module, configured to receive a twenty-first message, wherein the twenty-first message includes a 200OK message responsive to the twentieth message; a twenty-seventh module, configured to receive a twenty-second message, wherein the twenty-second message includes an off-hook 200OK message sent by the called terminal; a twenty-eighth module, configured to send a twenty-third message to the calling terminal, wherein the twenty-third message includes an off-hook 200OK message not carrying an SDP; and a twenty-ninth module, configured to send a twenty-fourth message to the called terminal, and receive a twenty-fifth message, wherein the twenty-fourth message includes an ACK message responsive to the twenty-second message, and the twenty-fifth message includes an ACK message responsive to the twenty-third message.

Alternatively, the apparatus further includes: a thirtieth module, configured to receive a twenty-sixth message, wherein the twenty-sixth message includes a 200OK message responsive to the call request and carrying an Answer SDP; a thirty-first module, configured to send a twenty-seventh message to the calling terminal, wherein the twenty-seventh message includes a 183 message carrying a Fake SDP and bSRVCC capability information of the called terminal; a thirty-second module, configured to send a twenty-eighth message to the called terminal, wherein the twenty-eighth message includes an ACK message responsive to the twenty-sixth message; a thirty-third module, configured to send a twenty-ninth message to the calling terminal, wherein the twenty-ninth message includes a 180 message not carrying an SDP; a thirty-fourth module, configured to send a thirtieth message to the calling terminal, wherein the thirtieth message includes an INFO message carrying a current pre-alerting state; a thirty-fifth module, configured to receive a thirty-first message, wherein the thirty-first message includes a 200OK message responsive to the thirtieth message; a thirty-sixth module, configured to receive a thirty-second message, wherein the thirty-second message includes an off-hook 200OK message sent by the called terminal; a thirty-seventh module, configured to send a thirty-third message to the calling terminal, wherein the thirty-third message includes an off-hook 200OK message not carrying an SDP; and a thirty-eighth module, configured to receive a thirty-fourth message, wherein the thirty-fourth message includes an ACK message responsive to the thirty-third message.

Alternatively, the apparatus further includes: a thirty-ninth module, configured to receive, after the fifth module sends the call request to the called terminal and before the first module receives the bSRVCC handover request of the calling terminal, the first message reliably transmitted, and forward the first message to the calling terminal; and the apparatus further includes: a fortieth module, configured to judge, after the first module receives the bSRVCC handover request of the calling terminal, whether a thirty-fifth message is received, wherein the thirty-fifth message includes a PRACK message of the calling terminal responsive to the first message; a forty-first module, configured to send, in the case where the fortieth module has determined that the thirty-fifth message is not received, a thirty-sixth message to the called terminal, wherein the thirty-sixth message includes a PRACK message responsive to the first message; and a forty-second module, configured to receive a thirty-seventh message, wherein the thirty-seventh message includes a 200OK message responsive to the thirty-sixth message.

Alternatively, the apparatus further includes: a forty-third module, configured to receive, after the fifth module sends the call request to the called terminal and before the first module receives the bSRVCC handover request of the calling terminal, the first message reliably transmitted, and forward the first message to the calling terminal; and the apparatus further includes: a forty-fourth module, configured to judge whether a thirty-eighth message is received and forwarded to the calling terminal before the first module receives the bSRVCC handover request of the calling terminal and whether a thirty-ninth message is received before the first module receives the bSRVCC handover request of the calling terminal, wherein the thirty-eighth message includes an UPDATE message sent by the called terminal, and the thirty-ninth message includes a 200OK message of the calling terminal responsive to the thirty-eighth message; and a forty-fifth module, configured to send a fortieth message to the called terminal, wherein the fortieth message includes a 200OK message responsive to the thirty-eighth message.

Alternatively, the apparatus further includes: a forty-sixth module, configured to judge, in the case where the fortieth module has determined that the thirty-fifth message is already received, or, after the forty-second module receives the thirty-seventh message, or, in the case where the forty-fourth module has determined that the thirty-eighth message is received and forwarded to the calling terminal before the SCC AS receives the bSRVCC handover request of the calling terminal and the forty-fourth module has determined that the thirty-ninth message is received before the SCC AS receives the bSRVCC handover request of the calling terminal, or, after the forty-fifth module sends the fortieth message to the called terminal, whether an SDP carried in the call request is the same as an SDP carried in the bSRVCC handover request; a forty-seventh module, configured to send, in the case where the forty-sixth module has determined that the SDP carried in the call request is different from the SDP carried in the bSRVCC handover request, a forty-first message to the called terminal, wherein the forty-first message includes an UPDATE message carrying an offer SDP of the bSRVCC handover request; and a forty-eighth module, configured to receive a forty-second message, wherein the forty-second message includes a 200OK message responsive to the forty-first message and carrying an Answer SDP.

Alternatively, the apparatus further includes: a forty-ninth module, configured to send, in the case where the forty-sixth module has determined that the SDP carried in the call request is the same as the SDP carried in the bSRVCC handover request, or, after the forty-eighth module receives the forty-second message, a forty-third message reliably transmitted to the calling terminal, wherein the forty-third message includes a 183 message carrying an Answer SDP and bSRVCC capability information of the called terminal; a fiftieth module, configured to send a forty-fourth message to the calling terminal, wherein the forty-fourth message includes an INFO message carrying a current pre-alerting state; a fifty-first module, configured to receive a forty-fifth message, wherein the forty-fifth message includes a 200OK message responsive to the forty-fourth message; a fifty-second module, configured to receive a forty-sixth message, and forward the forty-sixth message to the calling terminal, wherein the forty-sixth message includes a 180 message sent by the called terminal; a fifty-third module, configured to receive a forty-seventh message, and forward the forty-seventh message to the calling terminal, wherein the forty-seventh message includes an off-hook 200OK message sent by the called terminal; and a fifty-fourth module, configured to receive a forty-eighth message, and forward the forty-eighth message to the calling terminal, wherein the forty-eighth message includes an ACK message responsive to the forty-seventh message.

According to an embodiment of the invention, an SCC AS is also provided, which includes the above apparatus for bSRVCC.

By the embodiments of the invention, an SCC AS receives a bSRVCC handover request of a calling terminal; the SCC AS judges whether a first message is received before receiving the bSRVCC handover request, wherein the first message includes a message sent by a called terminal and carrying an Answer SDP; and in the case where the SCC AS has determined that the first message is not received before receiving the bSRVCC handover request, the SCC AS caches the bSRVCC handover request, and keeps a pre-determined message at the SCC AS before receiving the first message, wherein the pre-determined message includes a message sent by the called terminal and not carrying the Answer SDP. The problem that a bSRVCC procedure in a 3GPP related specification is non-implementable is solved, thereby providing an implementable bSRVCC procedure.

### BRIEF DESCRIPTION OF DRAWINGS

The drawings described herein are used to provide a further understanding of the invention, and constitute a part of the present application. The exemplary embodiments of the invention and descriptions thereof are used to explain the invention, and do not constitute improper limitations of the invention. In the drawing:
FIG. 1 is a flowchart of a bSRVCC method in which the same SDP is carried in two INVITEs in the related art.
FIG. 2 is a flowchart of a bSRVCC method in which different SDPs are carried in two INVITEs in the related art.
FIG. 3 is a flowchart of a scenario not considered in a 3GPP related specification in the related art.
FIG. 4 is a flowchart of a method for bSRVCC according to an embodiment of the invention.
FIG. 5 is a block diagram of an apparatus for bSRVCC according to an embodiment of the invention.
FIG. 6 is a flowchart 1 of a method for bSRVCC according to an embodiment of the invention.
FIG. 7 is a flowchart 2 of a method for bSRVCC according to an embodiment of the invention.
FIG. 8 is a flowchart 3 of a method for bSRVCC according to an embodiment of the invention.
FIG. 9 is a flowchart 4 of a method for bSRVCC according to an embodiment of the invention.
FIG. 10 is a flowchart 5 of a method for bSRVCC according to an embodiment of the invention.
FIG. 11 is a flowchart 6 of a method for bSRVCC according to an embodiment of the invention.
FIG. 12 is a flowchart 7 of a method for bSRVCC according to an embodiment of the invention.
FIG. 13 is a flowchart 8 of a method for bSRVCC according to an embodiment of the invention.

### DETAILED DESCRIPTION

The invention will be described below in detail with reference to the drawings and in conjunction with the embodiments. It should be noted that the embodiments in the present application and the features in the embodiments can be combined with each other without conflict.

It should be noted that the terms "first", "second", and the like in the specification and claims of the invention and the above drawings are used to distinguish similar objects and not necessarily used to describe a specific order or sequence.

In the present embodiment, a method for bSRVCC is provided. FIG. 4 is a flowchart of a method for bSRVCC according to an embodiment of the invention. As shown in FIG. 4, the flow includes the steps as follows.

At step S410, an SCC AS receives a bSRVCC handover request of a calling terminal.

At step S412, the SCC AS judges whether a first message is received before receiving the bSRVCC handover request, wherein the first message includes a message sent by a called terminal and carrying an Answer SDP.

At step S414, in the case where the SCC AS has determined that the first message is not received before receiving the bSRVCC handover request, the SCC AS caches the bSRVCC handover request, and keeps a pre-determined message at the SCC AS before receiving the first message, wherein the pre-determined message includes a message sent by the called terminal and not carrying the Answer SDP.

By the above steps, before a message carrying an Answer SDP is received, a bSRVCC handover request is cached, and a message sent by a called terminal and not carrying an Answer SDP such as a non-180 message not carrying an Answer SDP and/or a 200OK message not carrying an Answer SDP is kept at an SCC AS, thereby implementing asynchronous control of the SCC AS over the message. By the asynchronous control over the message, the defects in the related art of synchronous control of an SCC AS over a message may be remedied. The problem that a bSRVCC procedure in a 3GPP related specification is non-implementable is solved, thereby providing an implementable bSRVCC procedure.

Alternatively, before step S410, the above flow may further include the steps as follows.

At step S406, the SCC AS receives a call request (INVITE) initiated by the calling terminal at a PS domain.

At step S408, the SCC AS sends the call request (INVITE) to the called terminal.

In step S410, in the case where the calling terminal makes a handover from a PS domain to a CS domain, the SCC AS receives a bSRVCC handover request sent by an eMSC of the calling terminal.

Alternatively, for different situations of whether an SDP carried in the call request (INVITE) is the same as an SDP carried in the bSRVCC handover request, the embodiment of the invention provides respective processing manners.

For example, in the scenario where the SDP in the call request is different from the SDP in the bSRVCC handover request and a message sent by the called terminal and carrying an Answer SDP is not received before the bSRVCC handover request is received, after step S414, the flow of the method for bSRVCC includes the steps as follows.

At step S416-11, the SCC AS receives a 183 message sent by the called terminal and carrying an Answer SDP.

At step S418-11, in the case where the SDP in the call request is different from the SDP in the bSRVCC handover request, after the SCC AS interacts with the called terminal for a PRACK message and a 200OK message of the 183 message (i.e., after reliable transmission of the 183 message is achieved), the SCC AS sends an UPDATE message carrying an offer SDP of the bSRVCC handover request to the called terminal.

At step S420-11, the SCC AS receives a 200OK message of the called terminal responsive to the UPDATE message and carrying an Answer SDP.

At step S422-11, the SCC AS sends a 183 message carrying an Answer SDP to the calling terminal, wherein the 183 message carries bSRVCC capability information of the called terminal. For example, a Feature-Caps header may be added into the 183 message, carrying g.3gpp.ps2cs-srvcc-orig-pre-alerting is carried to indicate that the called terminal has a bSRVCC capability.

At step S424-11, after the calling terminal interacts with the SCC AS for the PRACK message and the 200OK message of the 183 message, the SCC AS sends an INFO message carrying a current ringing state to the calling terminal, the current ringing state at this time being a pre-alerting state.

At step S426-11, the SCC AS receives a 200OK message of the calling terminal responsive to the INFO message.

At step S428-11, the SCC AS receives a 180 message sent by the called terminal, and forwards the 180 message to the calling terminal.

At step S430-11, the SCC AS receives an off-hook 200OK message sent by the called terminal, and forwards the 200OK message to the calling terminal.

At step S432-11, the SCC AS receives an ACK message sent by the calling terminal, and forwards the ACK message to the called terminal.

For example, in the scenario where the SDP in the call request is the same as the SDP in the bSRVCC handover request and a message sent by the called terminal and carrying an Answer SDP is not received before the bSRVCC handover request is received, after step S414, the flow of the bSRVCC method includes the steps as follows.

At step S416-12, the SCC AS receives a 183 message sent by the called terminal and carrying an Answer SDP.

At step S418-12, in the case where the SDP in the call request is the same as the SDP in the bSRVCC handover request, the SCC AS sends a 183 message carrying an Answer SDP to the calling terminal, wherein the 183 message carries bSRVCC capability information of the called terminal. For example, a Feature-Caps header may be added to the 183 message, and g.3gpp.ps2cs-srvcc-orig-pre-alerting is carried.

At step S420-12, the calling terminal interacts with the SCC AS for a PRACK message and a 200OK message of the 183 message, and after the SCC AS interacts with the called terminal for the PRACK message and the 200OK message of the 183 message, the SCC AS sends an INFO message carrying a current ringring state (which is the pre-altering state at present) to the calling terminal.

At step S422-12, the SCC AS receives a 200OK message of the calling terminal responsive to the INFO message.

At step S424-12, the SCC AS receives a 180 message sent by the called terminal, and forwards the 180 message to the calling terminal.

At step S426-12, the SCC AS receives an off-hook 200OK message sent by the called terminal, and forwards the 200OK message to the calling terminal.

At step S428-12, the SCC AS receives an ACK message sent by the calling terminal, and forwards the ACK message to the called terminal.

In the bSRVCC method, there is a scenario where a 180 message or a 200OK message of an INVITE message arrives first. In the embodiment of the invention, the processing procedure of the above scenario where the two messages arrive first is described.

For example, in the scenario where a message sent by the called terminal and carrying an Answer SDP is not received before the bSRVCC handover request is received and the 180 message in step S414 arrives first, after step S414, the flow of the bSRVCC method includes the steps as follows.

At step S416-13, the SCC AS receives a 180 message sent by the called terminal.

At step S418-13, the SCC AS sends a 183 message carrying a Fake SDP to the calling terminal, wherein the 183 message carries bSRVCC capability information of the called terminal. For example, a Feature-Caps header is added to the 183 message, and g.3gpp.ps2cs-srvcc-orig-pre-alerting is carried.

At step S420-13, after the calling terminal interacts with the SCC AS for a PRACK message and a 200OK message of the 183 message, the SCC AS sends a 180 message not carrying an SDP to the calling terminal.

At step S422-13, the SCC AS sends an INFO message carrying a current ringing state (which is an early state at present) to the calling terminal.

At step S424-13, the SCC AS receives a 200OK message of the calling terminal responsive to the INFO message.

At step S426-13, the SCC AS receives an off-hook 200OK message sent by the called terminal.

At step S428-13, the SCC AS sends an off-hook 200OK message not carrying an SDP to the calling terminal.

At step S430-13, the SCC AS sends an ACK message of the 200OK message responsive to the INFO message to the called terminal, and receives an ACK message of an off-hook 200OK message sent by the calling terminal.

After step S430-13, the SCC AS may initiate an end-to-end air-switching procedure.

For example, in the scenario where a message sent by the called terminal and carrying an Answer SDP is not received before the bSRVCC handover request is received and the INVITE message in step S414 arrives first, in this flow, after step S414, the flow of the bSRVCC method includes the steps as follows.

At step S416-14, the SCC AS receives a 200OK message sent by the called terminal and carrying an Answer SDP.

At step S418-14, the SCC AS sends a 183 message carrying a Fake SDP to the calling terminal, wherein the 183 message carries bSRVCC capability information of the called terminal. For example, a Feature-Caps header is added to the 183 message, and g.3gpp.ps2cs-srvcc-orig-pre-alerting is carried.

At step S420-14, after the calling terminal interacts with the SCC AS for a PRACK message and a 200OK message of the 183 message and the SCC AS sends an ACK message responsive to the 200OK message to the called terminal, the SCC AS sends a 180 message not carrying an SDP to the calling terminal.

At step S422-14, the SCC AS sends an INFO message carrying a current ringing state (which is an early state at present) to the calling terminal.

At step S424-14, the SCC AS receives a 200OK message of the calling terminal responsive to the INFO message.

At step S426-14, the SCC AS receives an off-hook 200OK message sent by the called terminal.

At step S428-14, the SCC AS sends an off-hook 200OK message not carrying an SDP to the calling terminal.

At step S430-14, the SCC AS receives an ACK message of an off-hook 200OK message sent by the calling terminal.

After step S430-14, the SCC AS may initiate an end-to-end air-switching procedure.

Alternatively, the embodiment of the invention provides a flow of a bSRVCC method in the scenario where a message sent by the called terminal and carrying an Answer SDP is already received before the bSRVCC handover switch is received. In this flow, after step S408, and before step S410, the flow further includes the steps as follows.

At step S409, the SCC AS receives a 183 message sent by the called terminal and carrying an Answer SDP, and after the SCC AS interacts with the called terminal for PRACK and 200OK messages of the 183 message (i.e., after the 183 message is reliably transmitted), the SCC AS forwards the 183 message to the calling terminal.

For different situations of whether an SDP carried in the call request (INVITE) is the same as an SDP carried in the bSRVCC handover request, the embodiment of the invention provides respective processing manners.

For example, in the scenario where the SDP in the call request is different from the SDP in the bSRVCC handover request and a 183 message sent by the called terminal and carrying an Answer SDP is already received before the bSRVCC handover request is received, after step S410, the flow of the bSRVCC method includes the steps as follows.

At step S412-21, the SCC AS determines that a message sent by the called terminal and carrying an Answer SDP is already received before the bSRVCC handover request is received.

At step S414-21, in the case where the SDP in the call request is different from the SDP in the bSRVCC handover request, after the calling terminal interacts with the SCC AS for a PRACK message and a 200OK message of the 183 message, the SCC AS sends an UPDATE message carrying an offer SDP of the bSRVCC handover request to the called terminal.

At step S416-21, the SCC AS receives a 200OK message of the called terminal responsive to the UPDATE message and carrying an Answer SDP.

At step S418-21, the SCC AS sends a 183 message carrying an Answer SDP to the calling terminal, wherein the 183 message carries bSRVCC capability information of the called terminal. For example, a Feature-Caps header is added to the 183 message, and g.3gpp.ps2cs-srvcc-orig-pre-alerting is carried.

At step S420-21, after the calling terminal interacts with the SCC AS for a PRACK message and a 200OK message of the 183 message, the SCC AS sends an INFO message carrying a current ringing state (pre-alerting state) to the calling terminal.

At step S422-21, the SCC AS receives a 200OK message of the calling terminal responsive to the INFO message.

At step S424-21, the SCC AS receives a 180 message sent by the called terminal, and forwards the 180 message to the calling terminal.

At step S426-21, the SCC AS receives an off-hook 200OK message sent by the called terminal, and forwards the 200OK message to the calling terminal.

At step S428-21, the SCC AS receives an ACK message sent by the calling terminal, and forwards the ACK message to the called terminal.

For example, in the scenario where the SDP in the call request is the same as the SDP in the bSRVCC handover request and a message sent by the called terminal and carrying an Answer SDP is already received before the bSRVCC handover request is received, after step S410, the flow of the bSRVCC method includes the steps as follows.

At step S412-22, the SCC AS determines that a message sent by the called terminal and carrying an Answer SDP is already received before the bSRVCC handover request is received.

At step S414-22, in the case where the SDP in the call request is the same as the SDP in the bSRVCC handover request, after the calling terminal interacts with the SCC AS for a PRACK message and a 200OK message of the 183 message, the SCC AS sends a 183 message carrying an Answer SDP to the calling terminal, wherein the 183 message carries bSRVCC capability information of the called terminal. For example, a Feature-Caps header is added to the 183 message, and g.3gpp.ps2cs-srvcc-orig-pre-alerting is carried.

At step S416-22, after the calling terminal interacts with the SCC AS for a PRACK message and a 200OK message of the 183 message and the SCC AS interacts with the called terminal for the PRACK message and the 200OK message of the 183 message, the SCC AS sends an INFO message carrying a current ringing state (pre-alerting state) to the calling terminal.

At step S418-22, the SCC AS receives a 200OK message of the calling terminal responsive to the INFO message.

At step S420-22, the SCC AS receives a 180 message sent by the called terminal, and forwards the 180 message to the calling terminal.

At step S422-22, the SCC AS receives an off-hook 200OK message sent by the called terminal, and forwards the 200OK message to the calling terminal.

At step S424-22, the SCC AS receives an ACK message sent by the calling terminal, and forwards the ACK message to the called terminal.

In the bSRVCC method, there is a scenario where a bSRVCC handover occurs before a PRACK message of a 183 message or a 200OK message of an UPDATE message is sent in time. The processing flow for the above two scenarios is described in the embodiment of the invention.

For example, in the scenario where a 183 message sent by the called terminal and carrying an Answer SDP is already received before the bSRVCC handover request is received but a handover occurs before the calling terminal sends a PRACK message of the 183 message in time before step S410, after step S410, the flow of the bSRVCC method includes the steps as follows.

At step S412-23, the SCC AS determines that a message sent by the called terminal and carrying an Answer SDP is already received before the bSRVCC handover request is received and that a PRACK message of the 183 message sent by the calling terminal is not received before the bSRVCC handover request is received.

At step S414-23, in the case where the SDP in the call request is different from the SDP in the bSRVCC handover request, the SCC AS sends a PRACK message to the called terminal.

At step S416-23, the SCC AS receives a 200OK message of the called terminal responsive to the PRACK message.

At step S418-23, the SCC AS sends an UPDATE message carrying an offer SDP of the bSRVCC handover request to the called terminal.

At step S420-23, the SCC AS receives a 200OK message of the called terminal responsive to the UPDATE message and carrying an Answer SDP.

At step S422-23, the SCC AS sends a 183 message carrying an Answer SDP to the calling terminal, wherein the 183 message carries bSRVCC capability information of the called terminal. For example, a Feature-Caps header is added to the 183 message, and g.3gpp.ps2cs-srvcc-orig-pre-alerting is carried.

At step S424-23, after the calling terminal interacts with the SCC AS for a PRACK message and a 200OK message of the 183 message, the SCC AS sends an INFO message carrying a current ringing state (pre-alerting state) to the calling terminal.

At step S426-23, the SCC AS receives a 200OK message of the calling terminal responsive to the INFO message.

At step S428-23, the SCC AS receives a 180 message sent by the called terminal, and forwards the 180 message to the calling terminal.

At step S430-23, the SCC AS receives an off-hook 200OK message sent by the called terminal, and forwards the 200OK message to the calling terminal.

At step S432-23, the SCC AS receives an ACK message sent by the calling terminal, and forwards the ACK message to the called terminal.

For example, in the scenario where a message sent by the called terminal and carrying an Answer SDP is already received before the bSRVCC handover request is received and the called terminal sends an UPDATE message to the calling terminal before step S410 but a handover occurs before the calling terminal sends a 200OK message of the UPDATE message in time, after step S410, the flow of the bSRVCC method includes the steps as follows.

At step S412-24, the SCC AS determines that a message sent by the called terminal and carrying an Answer SDP is already received before the bSRVCC handover request is received, the called terminal sends an UPDATE message to the calling terminal before the bSRVCC handover request is received, and a 200OK message of the calling terminal responsive to the UPDATE message is not received before the bSRVCC handover request is received.

At step S414-24, in the case where the SDP in the call request is different from the SDP in the bSRVCC handover request, the SCC AS sends the 200OK message responsive to the UPDATE message to the called terminal.

At step S416-24, the SCC AS sends an UPDATE message carrying an offer SDP of the bSRVCC handover request to the called terminal.

At step S418-24, the SCC AS receives a 200OK message of the called terminal responsive to the UPDATE message and carrying an Answer SDP.

At step S420-24, the SCC AS sends a 183 message carrying an Answer SDP to the calling terminal, wherein the 183 message carries bSRVCC capability information of the called terminal. For example, a Feature-Caps header is added to the 183 message, and g.3gpp.ps2cs-srvcc-orig-pre-alerting is carried.

At step S422-24, after the calling terminal interacts with the SCC AS for a PRACK message and a 200OK message of the 183 message, the SCC AS sends an INFO message carrying a current ringing state (pre-alerting state) to the calling terminal.

At step S424-24, the SCC AS receives a 200OK message of the calling terminal responsive to the INFO message.

At step S426-24, the SCC AS receives a 180 message sent by the called terminal, and forwards the 180 message to the calling terminal.

At step S428-24, the SCC AS receives an off-hook 200OK message sent by the called terminal, and forwards the 200OK message to the calling terminal.

At step S430-24, the SCC AS receives an ACK message sent by the calling terminal, and forwards the ACK message to the called terminal.

1xx messages (e.g., 183 messages, 180 messages, 181 messages, etc.) may be reliably or non-reliably transmitted. Herein, in the reliable transmission, a receiver receiving a 1xx message is required to send a PRACK message to a sender, and after receiving the PRACK message, the sender sends a 200OK message to the receiver to indicate that the PRACK message is received. By means of the PRACK/200OK message of the sender and the receiver, it may be determined whether the 1xx message has been reliably transmitted.

By means of the description of the above implementation manners, those skilled in the art can clearly understand that the method according to the above embodiment may be implemented by means of software and a necessary general hardware platform. Of course, the hardware may also be used, but in many cases, the former is a better implementation manner. Based on such understanding, the technical solutions of the invention may be substantially embodied in a form of software product or parts contributing to the related art may be embodied in a form of software product, and a computer software product is stored in a storage medium (such as a Read-Only Memory/Random Access Memory (ROM/RAM), a magnetic disk or an optical disk), which includes a plurality of instructions enabling a terminal device (which may be a mobile phone, a computer, a server or a network device) to execute the method according to each embodiment of the invention.

In the present embodiment, an apparatus for bSRVCC is also provided, which is applied to an SCC AS. The apparatus is used to implement the above embodiments and preferred implementation manners. Those which have been illustrated will not be elaborated herein. Just as a term 'module' used below, the combination of software and/or hardware with predetermined functions may be implemented. Although the apparatus described by the following embodiment is better implemented by software, the implementation of hardware or the combination of software and hardware may be possible and conceived.

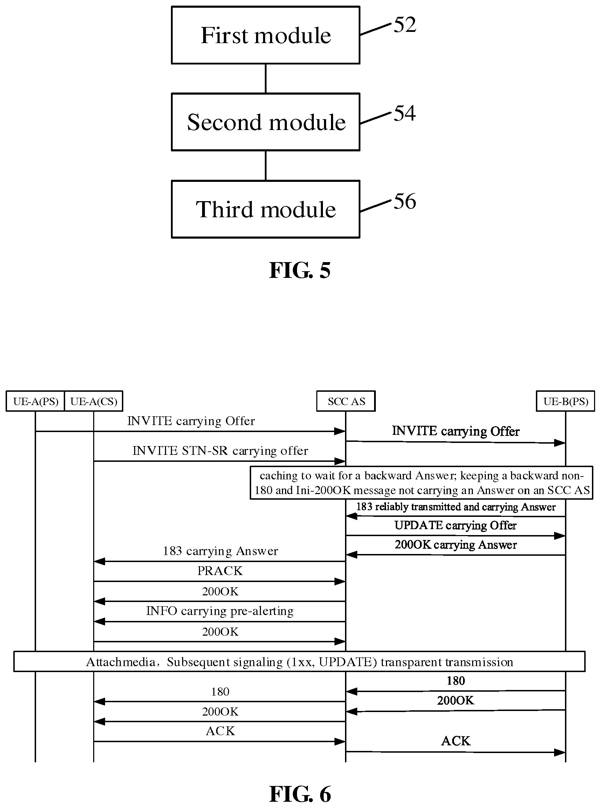

FIG. 5 is a block diagram of an apparatus for bSRVCC according to an embodiment of the invention. As shown in FIG. 5, the apparatus includes a first module 52, a second module 54, and a third module 56.

The first module 52 is configured to receive a bSRVCC handover request of a calling terminal; the second module 54 is coupled to the first module 52, and is configured to judge whether a first message is received before the bSRVCC handover request is received, wherein the first message includes a message sent by a called terminal and carrying an Answer SDP; and the third module 56 is coupled to the second module 54, and is configured to cache, in the case where the second module has determined that the first message is not received before the bSRVCC handover request is received, the bSRVCC handover request, and keep a pre-determined message at the SCC AS before the first message is received, wherein the pre-determined message includes a message sent by the called terminal and not carrying the Answer SDP.

Alternatively, the pre-determined message includes at least one of the following: a non-180 message sent by the called terminal and not carrying an Answer SDP, or a 200OK message sent by the called terminal and not carrying an Answer SDP.

Alternatively, the apparatus further includes: a fourth module, configured to receive a call request initiated by the calling terminal at a PS domain; and a fifth module, configured to send the call request to the called terminal, wherein the first module is configured to receive, in the case where the calling terminal makes a handover from a PS domain to a CS domain, the bSRVCC handover request, wherein the bSRVCC handover request is sent by an eMSC of the calling terminal.

Alternatively, the apparatus further includes: a sixth module, configured to receive the first message reliably transmitted; a seventh module, configured to judge whether an SDP carried in the call request is the same as an SDP carried in the bSRVCC handover request; an eighth module, configured to send, in the case where the seventh module has determined that the SDP carried in the call request is different from the SDP carried in the bSRVCC handover request, a second message to the called terminal, wherein the second message includes an UPDATE message carrying an offer SDP of the bSRVCC handover request; and a ninth module, configured to receive a third message, wherein the third message includes a 200OK message responsive to the second message and carrying an Answer SDP.

Alternatively, the apparatus further includes: a tenth module, configured to send, in the case where the seventh module has determined that the SDP carried in the call request is the same as the SDP carried in the bSRVCC handover request, or, after the ninth module receives the third message, a fourth message reliably transmitted to the calling terminal, wherein the fourth message includes a 183 message carrying an Answer SDP and bSRVCC capability information of the called terminal; an eleventh module, configured to send a fifth message to the calling terminal, wherein the fifth message includes an INFO message carrying a current pre-alerting state; a twelfth module, configured to receive a sixth message, wherein the sixth message includes a 200OK message responsive to the fifth message; a thirteenth module, configured to receive a seventh message, and forward the seventh message to the calling terminal, wherein the seventh message includes a 180 message sent by the called terminal; a fourteenth module, configured to receive an eighth message, and forward the eighth message to the calling terminal, wherein the eighth message includes an off-hook 200OK message sent by the called terminal; a fifteenth module, configured to receive a ninth message, and forward the ninth message to the called terminal, wherein the ninth message includes an ACK message responsive to the eighth message; a sixteenth module, configured to send an eleventh message reliably transmitted to the calling terminal, wherein the eleventh message includes a 183 message carrying an Answer SDP and bSRVCC capability information of the called terminal; a seventeenth module, configured to send a twelfth message to the called terminal, wherein the twelfth message includes an INFO message carrying a current pre-alerting state; an eighteenth module, configured to receive a thirteenth message, wherein the thirteenth message includes a 200OK message responsive to the twelfth message; a nineteenth module, configured to receive a fourteenth message, and forward the fourteenth message to the calling terminal, wherein the fourteenth message includes a 180 message sent by the called terminal; a twentieth module, configured to receive a fifteenth message, and forward the fifteenth message to the calling terminal, wherein the fifteenth message includes an off-hook 200OK message sent by the called terminal; and a twenty-first module, configured to receive a sixteenth message, and forward the sixteenth message to the called terminal, wherein the sixteenth message includes an ACK message responsive to the fifteenth message.

Alternatively, the apparatus further includes: a twenty-second module, configured to receive a seventeenth message, wherein the seventeenth message includes a 180 message sent by the called terminal; a twenty-third module, configured to send an eighteenth message reliably transmitted to the calling terminal, wherein the eighteenth message includes a 183 message carrying a Fake SDP and bSRVCC capability information of the called terminal; a twenty-fourth module, configured to send a nineteenth message to the calling terminal, wherein the nineteenth message includes a 180 message not carrying an SDP; a twenty-fifth module, configured to send a twentieth message to the calling terminal, wherein the twentieth message includes an INFO message carrying a current pre-alerting state; a twenty-sixth module, configured to receive a twenty-first message, wherein the twenty-first message includes a 200OK message responsive to the twentieth message; a twenty-seventh module, configured to receive a twenty-second message, wherein the twenty-second message includes an off-hook 200OK message sent by the called terminal; a twenty-eighth module, configured to send a twenty-third message to the calling terminal, wherein the twenty-third message includes an off-hook 200OK message not carrying an SDP; and a twenty-ninth module, configured to send a twenty-fourth message to the called terminal, and receive a twenty-fifth message, wherein the twenty-fourth message includes an ACK message responsive to the twenty-second message, and the twenty-fifth message includes an ACK message responsive to the twenty-third message.

Alternatively, the apparatus further includes: a thirtieth module, configured to receive a twenty-sixth message, wherein the twenty-sixth message includes a 200OK message responsive to the call request and carrying an Answer SDP; a thirty-first module, configured to send a twenty-seventh message to the calling terminal, wherein the twenty-seventh message includes a 183 message carrying a Fake SDP and bSRVCC capability information of the called terminal; a thirty-second module, configured to send a twenty-eighth message to the called terminal, wherein the twenty-eighth message includes an ACK message responsive to the twenty-sixth message; a thirty-third module, configured to send a twenty-ninth message to the calling terminal, wherein the twenty-ninth message includes a 180 message not carrying an SDP; a thirty-fourth module, configured to send a thirtieth message to the calling terminal, wherein the thirtieth message includes an INFO message carrying a current pre-alerting state; a thirty-fifth module, configured to receive a thirty-first message, wherein the thirty-first message includes a 200OK message responsive to the thirtieth message; a thirty-sixth module, configured to receive a thirty-second message, wherein the thirty-second message includes an off-hook 200OK message sent by the called terminal; a thirty-seventh module, configured to send a thirty-third message to the calling terminal, wherein the thirty-third message includes an off-hook 200OK message not carrying an SDP; and a thirty-eighth module, configured to receive a thirty-fourth message, wherein the thirty-fourth message includes an ACK message responsive to the thirty-third message.

Alternatively, the apparatus further includes: a thirty-ninth module, configured to receive, after the fifth module sends the call request to the called terminal and before the first module receives the bSRVCC handover request of the calling terminal, the first message reliably transmitted, and forward the first message to the calling terminal; and the apparatus further includes: a fortieth module, configured to judge, after the first module receives the bSRVCC handover request of the calling terminal, whether a thirty-fifth message is received, wherein the thirty-fifth message includes a PRACK message of the calling terminal responsive to the first message; a forty-first module, configured to send, in the case where the fortieth module has determined that the thirty-fifth message is not received, a thirty-sixth message to the called terminal, wherein the thirty-sixth message includes a PRACK message responsive to the first message; and a forty-second module, configured to receive a thirty-seventh message, wherein the thirty-seventh message includes a 200OK message responsive to the thirty-sixth message.

Alternatively, the apparatus further includes: a forty-third module, configured to receive, after the fifth module sends the call request to the called terminal and before the first module receives the bSRVCC handover request of the calling terminal, the first message reliably transmitted, and forward the first message to the calling terminal; and the apparatus further includes: a forty-fourth module, configured to judge whether a thirty-eighth message is received and forwarded to the calling terminal before the first module receives the bSRVCC handover request of the calling terminal and whether a thirty-ninth message is received before the first module receives the bSRVCC handover request of the calling terminal, wherein the thirty-eighth message includes an UPDATE message sent by the called terminal, and the thirty-ninth message includes a 200OK message of the calling terminal responsive to the thirty-eighth message; and a forty-fifth module, configured to send a fortieth message to the called terminal, wherein the fortieth message includes a 200OK message responsive to the thirty-eighth message.

Alternatively, the apparatus further includes: a forty-sixth module, configured to judge, in the case where the fortieth module has determined that the thirty-fifth message is already received, or, after the forty-second module receives the thirty-seventh message, or, in the case where the forty-fourth module has determined that the thirty-eighth message is received and forwarded to the calling terminal before the SCC AS receives the bSRVCC handover request of the calling terminal and the forty-fourth module has determined that the thirty-ninth message is received before the SCC AS receives the bSRVCC handover request of the calling terminal, or, after the forty-fifth module sends the fortieth message to the called terminal, whether an SDP carried in the call request is the same as an SDP carried in the bSRVCC handover request; a forty-seventh module, configured to send, in the case where the forty-sixth module has determined that the SDP carried in the call request is different from the SDP carried in the bSRVCC handover request, a forty-first message to the called terminal, wherein the forty-first message includes an UPDATE message carrying an offer SDP of the bSRVCC handover request; and a forty-eighth module, configured to receive a forty-second message, wherein the forty-second message includes a 200OK message responsive to the forty-first message and carrying an Answer SDP.

Alternatively, the apparatus further includes: a forty-ninth module, configured to send, in the case where the forty-sixth module has determined that the SDP carried in the call request is the same as the SDP carried in the bSRVCC handover request, or, after the forty-eighth module receives the forty-second message, a forty-third message reliably transmitted to the calling terminal, wherein the forty-third message includes a 183 message carrying an Answer SDP and bSRVCC capability information of the called terminal; a fiftieth module, configured to send a forty-fourth message to the calling terminal, wherein the forty-fourth message includes an INFO message carrying a current pre-alerting state; a fifty-first module, configured to receive a forty-fifth message, wherein the forty-fifth message includes a 200OK message responsive to the forty-fourth message; a fifty-second module, configured to receive a forty-sixth message, and forward the forty-sixth message to the calling terminal, wherein the forty-sixth message includes a 180 message sent by the called terminal; a fifty-third module, configured to receive a forty-seventh message, and forward the forty-seventh message to the calling terminal, wherein the forty-seventh message includes an off-hook 200OK message sent by the called terminal; and a fifty-fourth module, configured to receive a forty-eighth message, and forward the forty-eighth message to the calling terminal, wherein the forty-eighth message includes an ACK message responsive to the forty-seventh message.

In the present embodiment, an SCC AS is also provided, which includes the above apparatus for bSRVCC.

It should be noted that the above modules may be implemented by software or hardware. For the latter, it may be implemented in the following manner, but it is not limited to this: the above modules are all located in the same processor; or, the above modules are respectively located in multiple processors.

The embodiment of the invention also provides software for executing the technical solutions described in the above embodiments and preferred implementation manners.

The embodiment of the invention also provides a storage medium. In the present embodiment, the above storage medium may be configured to store program codes for performing the steps as follows.

At step S410, an SCC AS receives a bSRVCC handover request of a calling terminal.

At step S412, the SCC AS judges whether a first message is received before receiving the bSRVCC handover request, wherein the first message includes a message sent by a called terminal and carrying an Answer SDP.

At step S414, in the case where the SCC AS has determined that the first message is not received before receiving the bSRVCC handover request, the SCC AS caches the bSRVCC handover request, and keeps a pre-determined message at the SCC AS before receiving the first message, wherein the pre-determined message includes a message sent by the called terminal and not carrying the Answer SDP.

Alternatively, in the present embodiment, the above storage medium may include, but is not limited to, various media capable of storing program codes such as a U disk, an ROM, an RAM, a mobile hard disk, a magnetic disk or an optical disk.

Alternatively, specific examples in the present embodiment may refer to the examples described in the above embodiments and alternative implementation manners, which will not be elaborated here in the present embodiment.

In order to make the description of the embodiments of the invention clearer, the following description and illustration are made with alternative embodiments.

In order to propose an implementable system solution for bSRVCC and meet the requirements of operators, an alternative embodiment of the invention provides a method for bSRVCC. The following describes and illustrates an alternative embodiment of the invention in conjunction with a flow interaction diagram.

FIG. 6 is a flowchart 1 of a method for bSRVCC according to an embodiment of the invention. A processing flow in a scenario where a remote terminal (i.e., called terminal) does not send an Answer SDP during a bSRVCC handover request is shown in FIG. 6. The flow includes the steps as follows.

At step S601, a calling terminal UE-A initiates an IMS call at a PS domain, which passes through an SCC AS at the calling terminal side.

At step S602, the SCC AS sends a call request to a called terminal UE-B.

At step S603, the UE-A makes a handover from the PS domain to a CS domain, and a handover INVITE sent from the UE-A (CS) side is actually sent by an eMSC.

At step S604, the SCC AS caches the received handover request, and waits for a backward Answer SDP; and during waiting for a backward Answer SDP, a non-180 message, a 200OK (INVITE) message and other intermediate messages not carrying an Answer SDP from the UE-B such as a 181 message are intercepted by the SCC AS, and will not be sent to the forward UE-A (CS) side.

Herein, an expression similar to "200OK (INVITE)" in the embodiment of the invention is used to indicate that the 200OK message is in response to the INVITE message, which is the same below.

At step S605, the UE-B sends a 183 message carrying an Answer SDP to the SCC AS.

At step S606, after interacting with the UE-B for a PRACK message or a 200OK message, the SCC AS sends an Offer SDP of the handover request updated by UPDATE to the remote UE-B.

At step S607, the UE-B carries an Answer SDP in a 200OK (UPDATE) message, and sends the message to the SCC AS.

At step S608, the SCC AS carries an Answer SDP in a 183 message and sends the message to the forward UE-A (CS), the 183 message being added with a Feature-Caps header, and carrying g.3gpp.ps2cs-srvcc-orig-pre-alerting (feature-capability indicator).

At step S609, after the UE-A interacts with the SCC AS for a PRACK message, the SCC AS sends an INFO message carrying a pre-alerting state to the UE-A (CS).

At step S610, the UE-A (CS) returns a 200OK (INFO) message to the SCC AS.

At step S611, the SCC AS associates a forward Leg of handover with a backward Leg, and intermediate signaling such as 1xx and subsequent SDP supports transparent transmission.

At step S612, the UE-B sends a 180 message to the SCC AS.

At step S613, the SCC AS forwards the 180 message to the UE-A (CS).

At step S614, the UE-B sends an off-hook 200OK message to the SCC AS.

At step S615, the SCC AS forwards the off-hook 200OK message to the UE-A (CS), and the SCC AS transfers an ACK message.

At step S616, the flow is ended.

In the above flow, after receiving a handover request, the SCC AS does not perform subsequent operations until a backward Answer SDP arrives. This asynchronous operation is a creative improvement for the SCC AS.

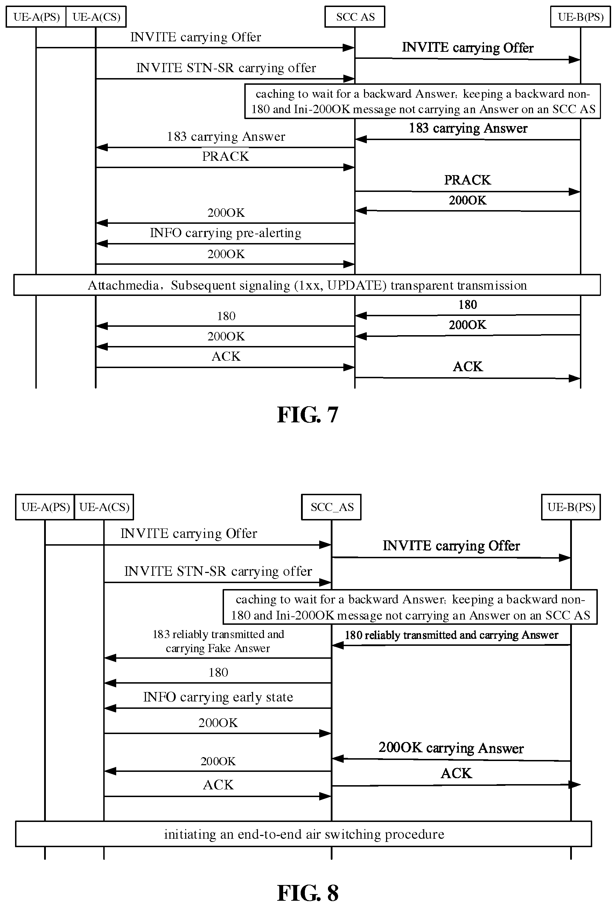

FIG. 7 is a flowchart 2 of a method for bSRVCC according to an embodiment of the invention. A processing flow for the same SDP in two INVITE requests (call INVITE and handover INVITE) in a scenario where a remote terminal does not send an Answer SDP during a bSRVCC handover request is shown in FIG. 7. The flow includes the steps as follows.

At step S701, a calling terminal UE-A initiates an IMS call at a PS domain, which passes through an SCC AS at the calling terminal side.

At step S702, the SCC AS sends a call request to a called terminal UE-B.

At step S703, the UE-A makes a handover from the PS domain to a CS domain, a handover INVITE sent from the UE-A (CS) side is actually sent by an eMSC, and an SDP carried in the INVITE message of the handover request is the same as an SDP carried in INVITE previously sent by the UE-A.

At step S704, the SCC AS caches the received handover request, and waits for a backward Answer SDP; and during waiting for a backward Answer SDP, a non-180 message, a 200OK (INVITE) message and other intermediate messages not carrying an Answer SDP from the UE-B such as a 181 message are intercepted by the SCC AS, and will not be sent to the forward UE-A (CS) side.

At step S705, the UE-B sends a 183 message carrying an Answer SDP to the SCC AS.

At step S706, the SCC AS directly sends the Answer SDP received previously from the backward UE-B to the forward UE-A (CS) in the 183 message, the 183 message being added with a Feature-Caps header, and carrying g.3gpp.ps2cs-srvcc-orig-pre-alerting (feature-capability indicator).

Subsequent processing is the same as step S609 to step S616 in FIG. 6, which will not be elaborated here.

FIG. 8 is a flowchart 3 of a method for bSRVCC according to an embodiment of the invention. A non-Precondition compatible flow for first arrival of a 180 message in a scenario where a remote terminal does not send an Answer SDP during a bSRVCC handover request is shown in FIG. 8. The flow includes the steps as follows.

At step S801, after step S601, a backward message waited by the SCC AS is a 180 message instead of a 183 message carrying an Answer SDP, and the SCC AS directly interacts with a backward terminal for a PRACK/200OK message of the 180 message.

At step S802, with reference to a current SRVCC flow, the SCC AS returns a 183 message carrying a Fake SDP to a forward terminal, and interacts therewith for a PRACK/200OK message, the 183 message being added with a Feature-Caps header, and carrying g.3gpp.ps2cs-srvcc-orig-pre-alerting (feature-capability indicator).

At step S803, the SCC AS returns a 180 message to the forward terminal, and interacts therewith for a PRACK/200OK message. No matter whether the 180 message of the UE-B carries an SDP, a 180 message sent to the UE-A (CS) by the SCC AS does not carry the SDP, and is not reliably transmitted.

At step S804, the SCC AS sends an INFO message to the forward terminal, and because the backward 180 message is already received, the INFO message carries an early state.

At step S805, the SCC AS receives a 200OK (INFO) message.

At step S806, the SCC AS receives an off-hook 200OK message of the UE-B.

At step S807, the SCC AS sends an off-hook 200OK message to the UE-A (CS). No matter whether the 200OK message of the UE-B carries an SDP, the 200OK message sent to the UE-A (CS) by the SCC AS does not carry the SDP.

At step S808, after an ACK message is transferred, the SCC AS initiates an air switching procedure.

At step S809, the flow is ended.

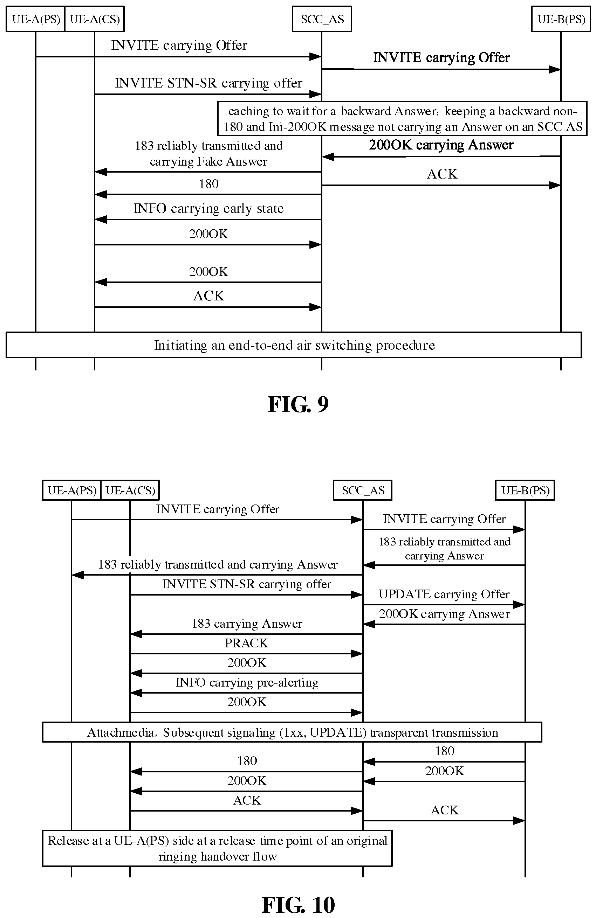

FIG. 9 is a flowchart 4 of a method for bSRVCC according to an embodiment of the invention. A non-Precondition compatible flow for first arrival of a 200OK (INVITE) message in a scenario where a remote terminal does not send an Answer SDP during a bSRVCC handover request is shown in FIG. 9. The flow includes the steps as follows.

At step S901, after step S601, a backward message waited by the SCC AS is a 200OK message instead of a 183 message carrying an Answer SDP, the 200OK message carrying an Answer SDP.

At step S902, with reference to a current SRVCC flow, the SCC AS returns a 183 message carrying a Fake SDP to a forward terminal, and interacts therewith for a PRACK/200OK message, the 183 message being added with a Feature-Caps header, and carrying g.3gpp.ps2cs-srvcc-orig-pre-alerting (feature-capability indicator).

At step S903, the SCC AS returns a 180 message to the forward terminal, and interacts therewith for a PRACK/200OK message. No matter whether the 200OK (INVITE) message of the UE-B carries an SDP, a 180 message sent to the UE-A (CS) by the SCC AS does not carry the SDP, and is not reliably transmitted.

At step S904, the SCC AS sends an INFO message to the forward terminal, the INFO message carrying an early state.

At step S905, the SCC AS receives a 200OK (INFO) message.

At step S906, the SCC AS sends an off-hook 200OK message to the UE-A (CS), wherein the message does not carry the SDP.

At step S907, after an ACK message is transferred, the SCC AS initiates an air switching procedure.

At step S908, the flow is ended.

FIG. 10 is a flowchart 5 of a method for bSRVCC according to an embodiment of the invention. A processing flow in a scenario where a remote terminal already sends an Answer SDP during a bSRVCC handover request is shown in FIG. 10. The flow includes the steps as follows.

At step S1001, a calling terminal UE-A initiates an IMS call at a PS domain, which passes through an SCC AS at the calling terminal side.

At step S1002, the SCC AS sends a call request to a called terminal UE-B.

At step S1003, the called terminal UE-B sends a 183 message to the SCC AS in a reliable transmission manner.

At step S1004, the SCC AS forwards the 183 message to the calling terminal UE-A (PS) in a reliable transmission manner.

At step S1005, the UE-A makes a handover from the PS domain to a CS domain, and a handover INVITE message sent from the UE-A (CS) side is actually sent by an eMSC.

At step S1006, the SCC AS receives the handover request, and sends an Offer SDP updated by an UPDATE message to the remote UE-B.

At step S1007, the UE-B carries an Answer SDP in a 200OK (UPDATE) message, and sends the message to the SCC AS.

At step S1008, the SCC AS carries an Answer SDP in a 183 message and sends the message to the forward UE-A (CS), the 183 message being added with a Feature-Caps header, and carrying g.3gpp.ps2cs-srvcc-orig-pre-alerting (feature-capability indicator).

At step S1009, after the UE-A interacts with the SCC AS for a PRACK message, the SCC AS sends an INFO message carrying a pre-alerting state to the UE-A (CS).

At step S1010, the UE-A (CS) returns a 200OK (INFO) message to the SCC AS.

At step S1011, the SCC AS associates a forward Leg of handover with a backward Leg, and intermediate signaling such as 1xx and subsequent SDP supports transparent transmission.

At step S1012, the UE-B sends a 180 message to the SCC AS.

At step S1013, the SCC AS forwards the 180 message to the UE-A (CS).

At step S1014, the UE-B sends an off-hook 200OK message to the SCC AS.

At step S1015, the SCC AS forwards the off-hook 200OK message to the UE-A (CS), and the SCC AS transfers an ACK message.

At step S1016, the flow is ended.

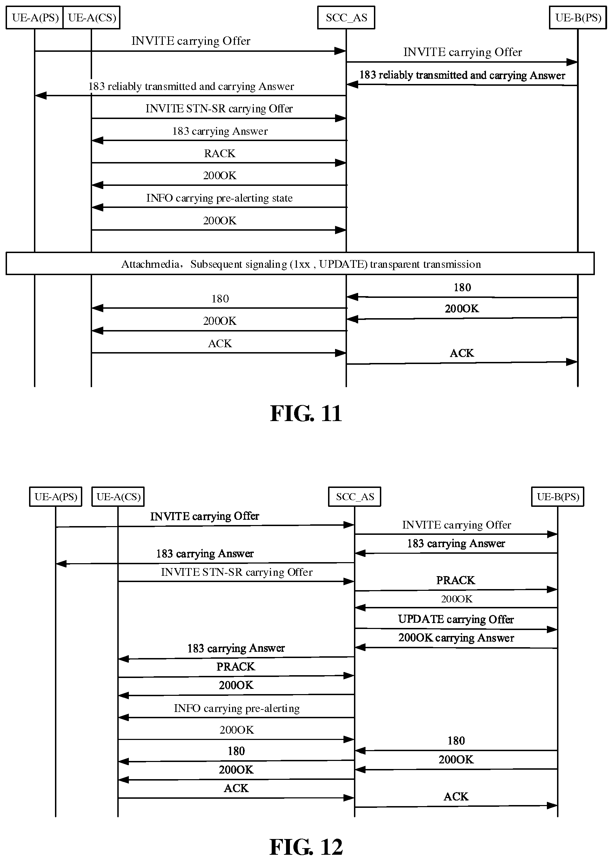

FIG. 11 is a flowchart 6 of a method for bSRVCC according to an embodiment of the invention. A processing flow for the same SDP in two INVITE requests (call INVITE and handover INVITE) in a scenario where a remote terminal already sends an Answer SDP during a bSRVCC handover request is shown in FIG. 11. The flow includes the steps as follows.

At step S1101, a calling terminal UE-A initiates an IMS call at a PS domain, which passes through an SCC AS at the calling terminal side.

At step S1101, the SCC AS sends a call request to a called terminal UE-B.

At step S1101, the called terminal UE-B sends a 183 message to the SCC AS in a reliable transmission manner.

At step S1101, the SCC AS forwards the 183 message to the calling terminal UE-A (PS) in a reliable transmission manner.

At step S1101, the UE-A makes a handover from the PS domain to a CS domain, a handover INVITE sent from the UE-A (CS) side is actually sent by an eMSC, and an SDP carried in the INVITE message of the handover request is the same as an SDP carried in INVITE previously sent by the UE-A.

At step S1101, the SCC AS directly sends the Answer SDP received previously from the backward UE-B to the forward UE-A (CS) in the 183 message, the 183 message being added with a Feature-Caps header, and carrying g.3gpp.ps2cs-srvcc-orig-pre-alerting (feature-capability indicator).

Subsequent processing is the same as step S1009 to step S1016 in FIG. 10, which will not be elaborated here.

FIG. 12 is a flowchart 7 of a method for bSRVCC according to an embodiment of the invention. A processing flow for supplementation of a PRACK via an SCC AS in a scenario where a remote terminal already sends an Answer SDP during a bSRVCC handover request is shown in FIG. 12. The flow includes the steps as follows.

At step S1201, if in step S1004 in FIG. 10, the SCC AS forwards a 183 message to the UE-A (PS), the UE-A (PS) cannot send a PRACK message in time, and at this time, a handover occurs.

At step S1202, the SCC AS first sends the PRACK message to a UE-B in a Dialog of the UE-B.

Herein, if an original call INVITE message does not carry Offer, the SCC AS supplements the PRACK message to carry a Fake SDP for Offer in the 183 message.

At step S1203, the UE-B returns a 200OK message to the SCC AS.

At step S1204, the SCC AS sends an UPDATE message, the content of an SDP referring to step S1006 in FIG. 10.

Subsequent processing is the same as step S1009 to step S1016 in FIG. 10, which will not be elaborated here.

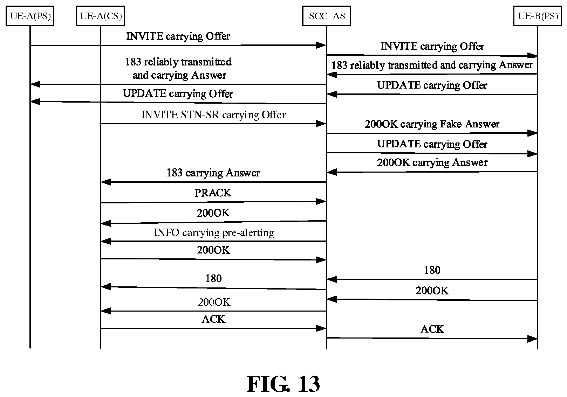

FIG. 13 is a flowchart 8 of a method for bSRVCC according to an embodiment of the invention. A processing flow for supplementation of a 200OK (UPDATE) via an SCC AS in a scenario where a remote terminal already sends an Answer SDP during a bSRVCC handover request is shown in FIG. 13. The flow includes the steps as follows.

At step S1301, if between step S1004 and step S1005 in FIG. 10, a backward UE-B sends an UPDATE message to a UE-A (PS), the UE-A (PS) cannot send a 200OK (UPDATE) message in time, and at this time, a handover occurs.

At step S1302, the SCC AS sends a 200OK (UPDATE) message to the UE-B first in a Dialog of the UE-B. According to an Offer/Answer state, if an SDP needs to be carried, a Fake SDP is constructed.

At step S1301, the SCC AS sends an UPDATE message, the content of an SDP referring to step S1006 in FIG. 10.

Subsequent processing is the same as step S1007 to step S1016 in FIG. 10, which will not be elaborated here.

In summary, with the above embodiments and alternative embodiments provided by the invention, the normal procedure of the existing 3GPP bSRVCC is improved, and it is creatively proposed that an SCC AS needs to wait for an Answer SDP of a called terminal side (backward) after receiving a handover request. Asynchronous control of the SCC AS for messages is involved, which is a major innovation over an original 3GPP bSRVCC synchronous message driving mode, thereby making the procedure reasonable and implementable. A set of compatible procedure solutions for incomplete signaling caused by a switched side is proposed. Moreover, a non-Precondition compatible procedure is added.

Obviously, those skilled in the art shall understand that all of the above modules or steps in the invention may be implemented by using a general calculation apparatus, may be centralized on a single calculation apparatus or may be distributed on a network composed of multiple calculation apparatuses. Alternatively, they may be implemented by using executable program codes of the calculation apparatuses. Thus, they may be stored in a storage apparatus and executed by the calculation apparatuses, the shown or described steps may be executed in a sequence different from this sequence under certain conditions, or they are manufactured into each integrated circuit module respectively, or multiple modules or steps therein are manufactured into a single integrated circuit module. Thus, the invention is not limited to a combination of any specific hardware and software.

The above is only the preferable embodiments of the invention, and not intended to limit the invention. As will occur to a person skilled in the art, the invention is susceptible to various modifications and changes. Any modifications, equivalent replacements, improvements and the like made within the spirit and principle of the invention shall fall within the scope of protection of the invention.

## Claims

1. A method for before-ringing Single Radio Voice Call Continuity, bSRVCC, comprising:
receiving, by a Service Continuity Application Server, SCC AS, a bSRVCC handover request of a calling terminal;
judging, by the SCC AS, whether a first message is received before receiving the bSRVCC handover request, wherein the first message comprises a message sent by a called terminal and carrying an Answer Session Description Protocol, Answer SDP; and
in the case where the SCC AS has determined that the first message is not received before receiving the bSRVCC handover request, caching, by the SCC AS, the bSRVCC handover request, and keeping a pre-determined message at the SCC AS before receiving the first message, wherein the pre-determined message comprises a message sent by the called terminal and not carrying the Answer SDP.

2. The method according to claim 1, wherein the pre-determined message comprises at least one of:
a non-180 message sent by the called terminal and not carrying an Answer SDP; or,
a 200OK message sent by the called terminal and not carrying an Answer SDP.

3. The method according to claim 2, wherein
before the SCC AS receives the bSRVCC handover request of the calling terminal, the method further comprises:
receiving, by the SCC AS, a call request initiated by the calling terminal at a Packet Switch, PS, domain; and
sending, by the SCC AS, the call request to the called terminal,
wherein receiving, by the SCC AS, the bSRVCC handover request of the calling terminal comprises:
in the case where the calling terminal makes a handover from a PS domain to a Circuit Switch, CS, domain, receiving, by the SCC AS, the bSRVCC handover request, wherein the bSRVCC handover request is sent by an enhanced Mobile Switch Center, eMSC, of the calling terminal.

4. The method according to claim 3, wherein after the SCC AS caches the bSRVCC handover request, the method further comprises:
receiving, by the SCC AS, the first message reliably transmitted;
judging, by the SCC AS, whether an SDP carried in the call request is the same as an SDP carried in the bSRVCC handover request;
in the case where the SCC AS has determined that the SDP carried in the call request is different from the SDP carried in the bSRVCC handover request, sending, by the SCC AS, a second message to the called terminal, wherein the second message comprises an UPDATE message carrying an offer SDP of the bSRVCC handover request; and
receiving, by the SCC AS, a third message, wherein the third message comprises a 200OK message responsive to the second message and carrying an Answer SDP.

5. The method according to claim 4, wherein in the case where the SCC AS has determined that the SDP carried in the call request is the same as the SDP carried in the bSRVCC handover request, or, after the SCC AS receives the third message, the method further comprises:
sending, by the SCC AS, a fourth message reliably transmitted to the calling terminal, wherein the fourth message comprises a 183 message carrying an Answer SDP and bSRVCC capability information of the called terminal;
sending, by the SCC AS, a fifth message to the calling terminal, wherein the fifth message comprises an INFO message carrying a current ringing state;
receiving, by the SCC AS, a sixth message, wherein the sixth message comprises a 200OK message responsive to the fifth message;
receiving, by the SCC AS, a seventh message, and forwarding the seventh message to the calling terminal, wherein the seventh message comprises a 180 message sent by the called terminal;
receiving, by the SCC AS, an eighth message, and forwarding the eighth message to the calling terminal, wherein the eighth message comprises an off-hook 200OK message sent by the called terminal;
receiving, by the SCC AS, a ninth message, and forwarding the ninth message to the called terminal, wherein the ninth message comprises an ACK message responsive to the eighth message;
sending, by the SCC AS, an eleventh message reliably transmitted to the calling terminal, wherein the eleventh message comprises a 183 message carrying an Answer SDP and bSRVCC capability information of the called terminal;
sending, by the SCC AS, a twelfth message to the called terminal, wherein the twelfth message comprises an INFO message carrying a current ringing state;
receiving, by the SCC AS, a thirteenth message, wherein the thirteenth message comprises a 200OK message responsive to the twelfth message;
receiving, by the SCC AS, a fourteenth message, and forwarding the fourteenth message to the calling terminal, wherein the fourteenth message comprises a 180 message sent by the called terminal;
receiving, by the SCC AS, a fifteenth message, and forwarding the fifteenth message to the calling terminal, wherein the fifteenth message comprises an off-hook 200OK message sent by the called terminal; and
receiving, by the SCC AS, a sixteenth message, and forwarding the sixteenth message to the called terminal, wherein the sixteenth message comprises an ACK message responsive to the fifteenth message.

6. The method according to claim 3, wherein after the SCC AS caches the bSRVCC handover request, the method further comprises:
receiving, by the SCC AS, a seventeenth message, wherein the seventeenth message comprises a 180 message sent by the called terminal;
sending, by the SCC AS, an eighteenth message reliably transmitted to the calling terminal, wherein the eighteenth message comprises a 183 message carrying a Fake SDP and bSRVCC capability information of the called terminal;
sending, by the SCC AS, a nineteenth message to the calling terminal, wherein the nineteenth message comprises a 180 message not carrying an SDP;
sending, by the SCC AS, a twentieth message to the calling terminal, wherein the twentieth message comprises an INFO message carrying a current ringing state;
receiving, by the SCC AS, a twenty-first message, wherein the twenty-first message comprises a 200OK message responsive to the twentieth message;
receiving, by the SCC AS, a twenty-second message, wherein the twenty-second message comprises an off-hook 200OK message sent by the called terminal;
sending, by the SCC AS, a twenty-third message to the calling terminal, wherein the twenty-third message comprises an off-hook 200OK message not carrying an SDP; and
sending, by the SCC AS, a twenty-fourth message to the called terminal, and receiving a twenty-fifth message, wherein the twenty-fourth message comprises an ACK message responsive to the twenty-second message, and the twenty-fifth message comprises an ACK message responsive to the twenty-third message.

7. The method according to claim 3, wherein after the SCC AS caches the bSRVCC handover request, the method further comprises:
receiving, by the SCC AS, a twenty-sixth message, wherein the twenty-sixth message comprises a 200OK message responsive to the call request and carrying an Answer SDP;
sending, by the SCC AS, a twenty-seventh message to the calling terminal, wherein the twenty-seventh message comprises a 183 message carrying a Fake SDP and bSRVCC capability information of the called terminal;
sending, by the SCC AS, a twenty-eighth message to the called terminal, wherein the twenty-eighth message comprises an ACK message responsive to the twenty-sixth message;
sending, by the SCC AS, a twenty-ninth message to the calling terminal, wherein the twenty-ninth message comprises a 180 message not carrying an SDP;
sending, by the SCC AS, a thirtieth message to the calling terminal, wherein the thirtieth message comprises an INFO message carrying a current ringing state;
receiving, by the SCC AS, a thirty-first message, wherein the thirty-first message comprises a 200OK message responsive to the thirtieth message;
receiving, by the SCC AS, a thirty-second message, wherein the thirty-second message comprises an off-hook 200OK message sent by the called terminal;
sending, by the SCC AS, a thirty-third message to the calling terminal, wherein the thirty-third message comprises an off-hook 200OK message not carrying an SDP; and
receiving, by the SCC AS, a thirty-fourth message, wherein the thirty-fourth message comprises an ACK message responsive to the thirty-third message.

8. The method according to claim 3, wherein
after the SCC AS sends the call request to the called terminal and before the SCC AS receives the bSRVCC handover request of the calling terminal, the method further comprises:
receiving, by the SCC AS, the first message reliably transmitted, and forwarding the first message to the calling terminal; and
after the SCC AS receives the bSRVCC handover request of the calling terminal, the method further comprises:
judging, by the SCC AS, whether a thirty-fifth message is received, wherein the thirty-fifth message comprises a PRACK message of the calling terminal responsive to the first message;
in the case where the SCC AS has determined that the thirty-fifth message is not received, sending, by the SCC AS, a thirty-sixth message to the called terminal, wherein the thirty-sixth message comprises a PRACK message responsive to the first message; and
receiving, by the SCC AS, a thirty-seventh message, wherein the thirty-seventh message comprises a 200OK message responsive to the thirty-sixth message.

9. The method according to claim 3, wherein
after the SCC AS sends the call request to the called terminal and before the SCC AS receives the bSRVCC handover request of the calling terminal, the method further comprises:
receiving, by the SCC AS, the first message reliably transmitted, and forwarding the first message to the calling terminal; and
after the SCC AS receives the bSRVCC handover request of the calling terminal, the method further comprises:
judging, by the SCC AS, whether a thirty-eighth message is received and forwarded to the calling terminal before the SCC AS receives the bSRVCC handover request of the calling terminal and whether a thirty-ninth message is received before the SCC AS receives the bSRVCC handover request of the calling terminal, wherein the thirty-eighth message comprises an UPDATE message sent by the called terminal, and the thirty-ninth message comprises a 200OK message of the calling terminal responsive to the thirty-eighth message; and
in the case where the SCC AS has determined that the thirty-eighth message is received and forwarded to the calling terminal before the SCC AS receives the bSRVCC handover request of the calling terminal and that the thirty-ninth message is not received before the SCC AS receives the bSRVCC handover request of the calling terminal, sending, by the SCC AS, a fortieth message to the called terminal, wherein the fortieth message comprises a 200OK message responsive to the thirty-eighth message.

10. The method according to claim 8 or 9, wherein in the case where the SCC AS has determined that the thirty-fifth message is already received, or, after the SCC AS receives the thirty-seventh message, or, in the case where the SCC AS has determined that the thirty-eighth message is received and forwarded to the calling terminal before the SCC AS receives the bSRVCC handover request of the calling terminal and that the thirty-ninth message is received before the SCC AS receives the bSRVCC handover request of the calling terminal, or, after the SCC AS sends the fortieth message to the called terminal, the method further comprises:
judging, by the SCC AS, whether an SDP carried in the call request is the same as an SDP carried in the bSRVCC handover request;
in the case where the SCC AS has determined that the SDP carried in the call request is different from the SDP carried in the bSRVCC handover request, sending, by the SCC AS, a forty-first message to the called terminal, wherein the forty-first message comprises an UPDATE message carrying an offer SDP of the bSRVCC handover request; and
receiving, by the SCC AS, a forty-second message, wherein the forty-second message comprises a 200OK message responsive to the forty-first message and carrying an Answer SDP.

11. The method according to claim 10, wherein in the case where the SCC AS has determined that the SDP carried in the call request is the same as the SDP carried in the bSRVCC handover request, or, after the SCC AS receives the forty-second message, the method further comprises:
sending, by the SCC AS, a forty-third message reliably transmitted to the calling terminal, wherein the forty-third message comprises a 183 message carrying an Answer SDP and bSRVCC capability information of the called terminal;
sending, by the SCC AS, a forty-fourth message to the calling terminal, wherein the forty-fourth message comprises an INFO message carrying a current ringing state;
receiving, by the SCC AS, a forty-fifth message, wherein the forty-fifth message comprises a 200OK message responsive to the forty-fourth message;
receiving, by the SCC AS, a forty-sixth message, and forwarding the forty-sixth message to the calling terminal, wherein the forty-sixth message comprises a 180 message sent by the called terminal;
receiving, by the SCC AS, a forty-seventh message, and forwarding the forty-seventh message to the calling terminal, wherein the forty-seventh message comprises an off-hook 200OK message sent by the called terminal; and
receiving, by the SCC AS, a forty-eighth message, and forwarding the forty-eighth message to the calling terminal, wherein the forty-eighth message comprises an ACK message responsive to the forty-seventh message.

12. An apparatus for before-ringing Single Radio Voice Call Continuity, bSRVCC, applied to a Service Continuity Application Server, SCC AS, comprising:
a first module, configured to receive a bSRVCC handover request of a calling terminal;
a second module, configured to judge whether a first message is received before the bSRVCC handover request is received, wherein the first message comprises a message sent by a called terminal and carrying an Answer Session Description Protocol, Answer SDP; and
a third module, configured to cache, in the case where the second module has determined that the first message is not received before the bSRVCC handover request is received, the bSRVCC handover request, and keep a pre-determined message at the SCC AS before the first message is received, wherein the pre-determined message comprises a message sent by the called terminal and not carrying the Answer SDP.

13. The apparatus according to claim 12, wherein the pre-determined message comprises at least one of:
a non-180 message sent by the called terminal and not carrying an Answer SDP; or,
a 200OK message sent by the called terminal and not carrying an Answer SDP.

14. The apparatus according to claim 13, further comprising:
a fourth module, configured to receive a call request initiated by the calling terminal at a Packet Switch, PS, domain; and
a fifth module, configured to send the call request to the called terminal,
wherein the first module is configured to receive, in the case where the calling terminal makes a handover from a PS domain to a Circuit Switch, CS, domain, the bSRVCC handover request, wherein the bSRVCC handover request is sent by an enhanced Mobile Switch Center, eMSC, of the calling terminal.

15. The apparatus according to claim 14, further comprising:
a sixth module, configured to receive the first message reliably transmitted;
a seventh module, configured to judge whether an SDP carried in the call request is the same as an SDP carried in the bSRVCC handover request;
an eighth module, configured to send, in the case where the seventh module has determined that the SDP carried in the call request is different from the SDP carried in the bSRVCC handover request, a second message to the called terminal, wherein the second message comprises an UPDATE message carrying an offer SDP of the bSRVCC handover request; and
a ninth module, configured to receive a third message, wherein the third message comprises a 200OK message responsive to the second message and carrying an Answer SDP.

16. The apparatus according to claim 15, further comprising:
a tenth module, configured to send, in the case where the seventh module has determined that the SDP carried in the call request is the same as the SDP carried in the bSRVCC handover request, or, after the ninth module receives the third message, a fourth message reliably transmitted to the calling terminal, wherein the fourth message comprises a 183 message carrying an Answer SDP and bSRVCC capability information of the called terminal;
an eleventh module, configured to send a fifth message to the calling terminal, wherein the fifth message comprises an INFO message carrying a current ringing state;
a twelfth module, configured to receive a sixth message, wherein the sixth message comprises a 200OK message responsive to the fifth message;
a thirteenth module, configured to receive a seventh message, and forward the seventh message to the calling terminal, wherein the seventh message comprises a 180 message sent by the called terminal;
a fourteenth module, configured to receive an eighth message, and forward the eighth message to the calling terminal, wherein the eighth message comprises an off-hook 200OK message sent by the called terminal;
a fifteenth module, configured to receive a ninth message, and forward the ninth message to the called terminal, wherein the ninth message comprises an ACK message responsive to the eighth message;
a sixteenth module, configured to send an eleventh message reliably transmitted to the calling terminal, wherein the eleventh message comprises a 183 message carrying an Answer SDP and bSRVCC capability information of the called terminal;
a seventeenth module, configured to send a twelfth message to the called terminal, wherein the twelfth message comprises an INFO message carrying a current ringing state;
an eighteenth module, configured to receive a thirteenth message, wherein the thirteenth message comprises a 200OK message responsive to the twelfth message;
a nineteenth module, configured to receive a fourteenth message, and forward the fourteenth message to the calling terminal, wherein the fourteenth message comprises a 180 message sent by the called terminal;
a twentieth module, configured to receive a fifteenth message, and forward the fifteenth message to the calling terminal, wherein the fifteenth message comprises an off-hook 200OK message sent by the called terminal; and
a twenty-first module, configured to receive a sixteenth message, and forward the sixteenth message to the called terminal, wherein the sixteenth message comprises an ACK message responsive to the fifteenth message.

17. The apparatus according to claim 14, further comprising:
a twenty-second module, configured to receive a seventeenth message, wherein the seventeenth message comprises a 180 message sent by the called terminal;
a twenty-third module, configured to send an eighteenth message reliably transmitted to the calling terminal, wherein the eighteenth message comprises a 183 message carrying a Fake SDP and bSRVCC capability information of the called terminal;
a twenty-fourth module, configured to send a nineteenth message to the calling terminal, wherein the nineteenth message comprises a 180 message not carrying an SDP;
a twenty-fifth module, configured to send a twentieth message to the calling terminal, wherein the twentieth message comprises an INFO message carrying a current ringing state;
a twenty-sixth module, configured to receive a twenty-first message, wherein the twenty-first message comprises a 200OK message responsive to the twentieth message;
a twenty-seventh module, configured to receive a twenty-second message, wherein the twenty-second message comprises an off-hook 200OK message sent by the called terminal;
a twenty-eighth module, configured to send a twenty-third message to the calling terminal, wherein the twenty-third message comprises an off-hook 200OK message not carrying an SDP; and
a twenty-ninth module, configured to send a twenty-fourth message to the called terminal, and receive a twenty-fifth message, wherein the twenty-fourth message comprises an ACK message responsive to the twenty-second message, and the twenty-fifth message comprises an ACK message responsive to the twenty-third message.

18. The apparatus according to claim 14, further comprising:
a thirtieth module, configured to receive a twenty-sixth message, wherein the twenty-sixth message comprises a 200OK message responsive to the call request and carrying an Answer SDP;
a thirty-first module, configured to send a twenty-seventh message to the calling terminal, wherein the twenty-seventh message comprises a 183 message carrying a Fake SDP and bSRVCC capability information of the called terminal;
a thirty-second module, configured to send a twenty-eighth message to the called terminal, wherein the twenty-eighth message comprises an ACK message responsive to the twenty-sixth message;
a thirty-third module, configured to send a twenty-ninth message to the calling terminal, wherein the twenty-ninth message comprises a 180 message not carrying an SDP;
a thirty-fourth module, configured to send a thirtieth message to the calling terminal, wherein the thirtieth message comprises an INFO message carrying a current ringing state;
a thirty-fifth module, configured to receive a thirty-first message, wherein the thirty-first message comprises a 200OK message responsive to the thirtieth message;
a thirty-sixth module, configured to receive a thirty-second message, wherein the thirty-second message comprises an off-hook 200OK message sent by the called terminal;
a thirty-seventh module, configured to send a thirty-third message to the calling terminal, wherein the thirty-third message comprises an off-hook 200OK message not carrying an SDP; and
a thirty-eighth module, configured to receive a thirty-fourth message, wherein the thirty-fourth message comprises an ACK message responsive to the thirty-third message.

19. The apparatus according to claim 14, further comprising:
a thirty-ninth module, configured to receive, after the fifth module sends the call request to the called terminal and before the first module receives the bSRVCC handover request of the calling terminal, the first message reliably transmitted, and forward the first message to the calling terminal;
a fortieth module, configured to judge, after the first module receives the bSRVCC handover request of the calling terminal, whether a thirty-fifth message is received, wherein the thirty-fifth message comprises a PRACK message of the calling terminal responsive to the first message;
a forty-first module, configured to send, in the case where the fortieth module has determined that the thirty-fifth message is not received, a thirty-sixth message to the called terminal, wherein the thirty-sixth message comprises a PRACK message responsive to the first message; and
a forty-second module, configured to receive a thirty-seventh message, wherein the thirty-seventh message comprises a 200OK message responsive to the thirty-sixth message.

20. The apparatus according to claim 14, further comprising:
a forty-third module, configured to receive, after the fifth module sends the call request to the called terminal and before the first module receives the bSRVCC handover request of the calling terminal, the first message reliably transmitted, and forward the first message to the calling terminal;
a forty-fourth module, configured to judge whether a thirty-eighth message is received and forwarded to the calling terminal before the first module receives the bSRVCC handover request of the calling terminal and whether a thirty-ninth message is received before the first module receives the bSRVCC handover request of the calling terminal, wherein the thirty-eighth message comprises an UPDATE message sent by the called terminal, and the thirty-ninth message comprises a 200OK message of the calling terminal responsive to the thirty-eighth message; and
a forty-fifth module, configured to send a fortieth message to the called terminal, wherein the fortieth message comprises a 200OK message responsive to the thirty-eighth message.

21. The apparatus according to claim 19 or 20, further comprising:
a forty-sixth module, configured to judge, in the case where the fortieth module has determined that the thirty-fifth message is already received, or, after the forty-second module receives the thirty-seventh message, or, in the case where the forty-fourth module has determined that the thirty-eighth message is received and forwarded to the calling terminal before the SCC AS receives the bSRVCC handover request of the calling terminal and the forty-fourth module has determined that the thirty-ninth message is received before the SCC AS receives the bSRVCC handover request of the calling terminal, or, after the forty-fifth module sends the fortieth message to the called terminal, whether an SDP carried in the call request is the same as an SDP carried in the bSRVCC handover request;
a forty-seventh module, configured to send, in the case where the forty-sixth module has determined that the SDP carried in the call request is different from the SDP carried in the bSRVCC handover request, a forty-first message to the called terminal, wherein the forty-first message comprises an UPDATE message carrying an offer SDP of the bSRVCC handover request; and
a forty-eighth module, configured to receive a forty-second message, wherein the forty-second message comprises a 200OK message responsive to the forty-first message and carrying an Answer SDP.

22. The apparatus according to claim 21, further comprising:
a forty-ninth module, configured to send, in the case where the forty-sixth module has determined that the SDP carried in the call request is the same as the SDP carried in the bSRVCC handover request, or, after the forty-eighth module receives the forty-second message, a forty-third message reliably transmitted to the calling terminal, wherein the forty-third message comprises a 183 message carrying an Answer SDP and bSRVCC capability information of the called terminal;
a fiftieth module, configured to send a forty-fourth message to the calling terminal, wherein the forty-fourth message comprises an INFO message carrying a current ringing state;
a fifty-first module, configured to receive a forty-fifth message, wherein the forty-fifth message comprises a 200OK message responsive to the forty-fourth message;
a fifty-second module, configured to receive a forty-sixth message, and forward the forty-sixth message to the calling terminal, wherein the forty-sixth message comprises a 180 message sent by the called terminal;
a fifty-third module, configured to receive a forty-seventh message, and forward the forty-seventh message to the calling terminal, wherein the forty-seventh message comprises an off-hook 200OK message sent by the called terminal; and
a fifty-fourth module, configured to receive a forty-eighth message, and forward the forty-eighth message to the calling terminal, wherein the forty-eighth message comprises an ACK message responsive to the forty-seventh message.

23. A Service Continuity Application Server, SCC AS, comprising: the apparatus for before-ringing Single Radio Voice Call Continuity, bSRVCC, according to any one of claims 12 to 22.
